(19) Europäisches Patentamt
European Patent Office
Office européen des brevets

(11) EP 4 287 614 A1

# (12) EUROPEAN PATENT APPLICATION

published in accordance with Art. 153(4) EPC

(43) Date of publication:
**06.12.2023 Bulletin 2023/49**

(21) Application number: **21923280.8**

(22) Date of filing: **27.12.2021**

(51) International Patent Classification (IPC):
***H04N 7/18*** *(2006.01)* ***H04L 47/76*** *(2022.01)*
***H04N 5/225*** *(2006.01)* ***H04N 5/232*** *(2006.01)*

(52) Cooperative Patent Classification (CPC):
**H04L 47/83; H04L 47/76; H04N 7/18; H04N 23/00; H04N 23/60**

(86) International application number:
**PCT/JP2021/048505**

(87) International publication number:
**WO 2022/163277 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2021 JP 2021014175**

(71) Applicant: **Sony Group Corporation**
**Tokyo 108-0075 (JP)**

(72) Inventors:
- **YAMAGISHI, Yasuaki**
**Tokyo 108-0075 (JP)**
- **TAKABAYASHI, Kazuhiko**
**Tokyo 108-0075 (JP)**

(74) Representative: **D Young & Co LLP**
**120 Holborn**
**London EC1N 2DY (GB)**

## (54) DATA PROCESSING DEVICE AND METHOD, AND DATA PROCESSING SYSTEM

(57) The present technique relates to a data processing device and a method, and a data processing system, capable of dynamically securing network resources. The data processing system includes a client device and a resource manager. The client device transfers image data generated by an image sensor to a network. The resource manager secures, on the network, a resource necessary for object recognition processing on the image data in accordance with a timing at which the image sensor generates an I-frame. The present technique can be applied, for example, in a data processing device or the like that controls an application executed on a network.

Fig. 1

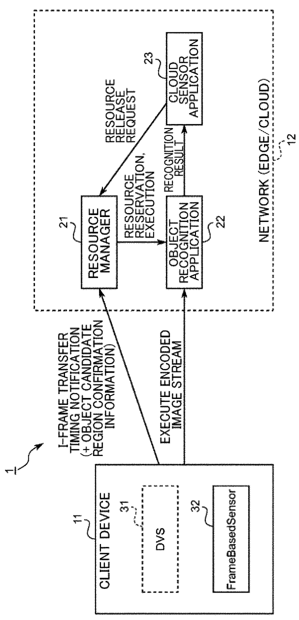




Processed by Luminess, 75001 PARIS (FR)

## Description

[Technical Field]

The present technique relates to a data processing device and method, and a data processing system, and particularly relates to a data processing device and method, and a data processing system, capable of dynamically securing network resources.

[Background Art]

In PTL 1, the present applicant proposed an object detecting system using a combination of a synchronous image sensor and an asynchronous DVS. A synchronous image sensor is a sensor that captures images in synchronization with a vertical synchronization signal and outputs one frame's (screen's) worth of image data in the period of the vertical synchronization signal. "DVS" is an acronym for "dynamic vision sensor", and is a sensor that outputs event data expressing the occurrence of an event using a luminance change in a pixel as an event. The DVS outputs event data at the timing when an event occurs regardless of the vertical synchronization signal, and is therefore an asynchronous-type or address control-type image sensor.

The event data generated by the DVS is data having extremely fine time granularity. Injecting the large amount of data generated by the DVS into a network indiscriminately may result in the network breaking down if the capacity of the network is limited, meaning that the data that is truly needed will not be processed correctly. Conversely, securing excessive computational resources on the network at all times in preparation for large amounts of data incurs excessive costs.

[Citation List]

[Patent Literature]

[PTL 1]
WO 2020/195769

[Summary]

[Technical Problem]

Recent years have seen growing momentum in the utilization of IoT devices, as well as sensing data obtained from IoT devices using artificial intelligence (AI) and the like. Regardless of whether a DVS is used or not, resource depletion and wasteful energy consumption may be major problems, and what is therefore needed is a method that can sequentially and dynamically secure network resources when needed.

Having been achieved in light of such circumstances, the present technique makes it possible to secure network resources dynamically.

[Solution to Problem]

A data processing device according to a first aspect of the present technique includes a management module that secures, on a network, a resource necessary for object recognition processing on image data transferred from an image sensor in accordance with a timing at which the image sensor generates an I-frame.

A data processing method according to a first aspect of the present technique includes securing, on a network, a resource necessary for object recognition processing on image data transferred from an image sensor in accordance with a timing at which the image sensor generates an I-frame, the securing being performed by a data processing device.

In the first aspect of the present technique, a resource necessary for object recognition processing on image data transferred from an image sensor is secured on a network in accordance with a timing at which the image sensor generates an I-frame.

A data processing system according to a second aspect of the present technique includes: a client device that transfers image data generated by an image sensor to a network; and a management module that secures, on a network, a resource necessary for object recognition processing on the image data in accordance with a timing at which the image sensor generates an I-frame.

In the second aspect of the present technique, image data generated by the image sensor is transferred to the network, and a resource necessary for object recognition processing on the image data is secured on a network in accordance with a timing at which the image sensor generates an I-frame.

The network includes at least two devices and a mechanism that enables the transmission of information from one of the devices to the other device. The network includes application resources for performing computation and storage and network/transport resources for performing data transfer. The devices communicating over the network may be independent devices, or may be internal blocks constituting a single device.

The management module can be implemented by causing a computer to execute a program. The program can be provided by being transmitted through a transmission medium or by being recorded in a recording medium.

The data processing device may be a standalone device, or internal blocks constituting a single device.

[Brief Description of Drawings]

[Fig. 1]
Fig. 1 is a block diagram illustrating an example of the configuration of a data processing system according to an embodiment of the present technique.

[Fig. 2]

Fig. 2 is a diagram illustrating the flow of typical processing in object recognition processing.

[Fig. 3]

Fig. 3 is a diagram illustrating the generation of image data and event data by a DVS and an FBS, respectively.

[Fig. 4]

Fig. 4 is a diagram illustrating object detection by a DVS.

[Fig. 5]

Fig. 5 is a data processing flowchart illustrating a case when a DVS is not provided.

[Fig. 6]

Fig. 6 is a data processing flowchart illustrating a case when a DVS is provided.

[Fig. 7]

Fig. 7 is a processing flowchart comparing object recognition processing when the DVS is provided, as in Fig. 5, and when the DVS is not provided, as in Fig. 6.

[Fig. 8]

Fig. 8 is a block diagram illustrating an example of the configuration of a data processing system according to another embodiment of the present technique.

[Fig. 9]

Fig. 9 is a block diagram illustrating an example of the specific configuration of user equipment.

[Fig. 10]

Fig. 10 is a block diagram illustrating an example of the specific configuration of a resource manager.

[Fig. 11]

Fig. 11 is a block diagram illustrating an example of the specific configuration of an ObjDetection EAS.

[Fig. 12]

Fig. 12 is a data processing flowchart illustrating a case when a DVS is provided.

[Fig. 13]

Fig. 13 is a data processing flowchart illustrating a case when a DVS is not provided.

[Fig. 14]

Fig. 14 is a diagram illustrating an example of the configuration of a resource managed by a resource manager.

[Fig. 15]

Fig. 15 is a diagram illustrating lifecycle management of application resources when a DVS is not provided.

[Fig. 16]

Fig. 16 is a diagram illustrating lifecycle management of application resources when a DVS is provided.

[Fig. 17]

Fig. 17 is a diagram illustrating an example of the network/transport configuration of a 5G network.

[Fig. 18]

Fig. 18 is a diagram illustrating lifecycle management of network/transport resources in the case of a 5G network.

[Fig. 19]

Fig. 19 is a diagram illustrating an example of the network/transport configuration of an IOWN network.

[Fig. 20]

Fig. 20 is a diagram illustrating lifecycle management of network/transport resources in the case of an IOWN network.

[Fig. 21]

Fig. 21 is a block diagram illustrating an example of the configuration of a data processing system in which an application that performs tracking processing is added.

[Fig. 22]

Fig. 22 is a data processing flowchart including resource adjustment/optimization of an ObjTracking EAS that performs tracking processing.

[Fig. 23]

Fig. 23 is a diagram illustrating an example of the structure of a workflow description.

[Fig. 24]

Fig. 24 is a block diagram illustrating an example of the configuration of an embodiment of a computer to which the present technique is applied.

[Description of Embodiments]

Modes for embodying the present technique (hereinafter referred to as embodiments) will be described below with reference to the accompanying drawings. In the present specification and the drawings, constituent elements having substantially the same functional configuration will be denoted by the same reference numerals, and thus repeated descriptions thereof will be omitted. The descriptions will be given in the following order.

1. Example of Configuration of Data Processing System
2. Data Processing Flow
3. Configuration Using Edge Application Architecture
4. Data Processing Flow
5. Resource Management By Resource Manager
6. Additional Examples of Configuration of Tracking Processing Module
7. Conclusion
8. Other Use Cases
9. Example of Configuration Of Computer

<1. Example of Configuration of Data Processing System>

Fig. 1 is a block diagram illustrating an example of the configuration of a data processing system according to an embodiment of the present technique.

A data processing system 1 of Fig. 1 is constituted by a client device 11, a resource manager 21 located on a network 12, an object recognition application 22, and a cloud sensor application 23.

The data processing system 1 is a system that transfers data of an image captured by the client device 11 (image data) to the network 12 and executes, within the network 12, object recognition processing that recognizes an object in the image.

The network 12 includes a plurality of data processing devices and a predetermined communication network enabling those devices to connect to each other. A Local Area Network (LAN), Wide Area Network (WAN), the Internet, a mobile communication networks such as 4G and 5G networks, an all-photonics network proposed by the IOWN Global Forum, Inc., and the like can be given as examples of the predetermined communication network. The data processing device is constituted by, for example, a sensor device, a router, a modem, a hub, a bridge, a switching hub, a base station control device, an exchange, a server device, or the like, and has a network connection function for connecting to the predetermined communication network and a data processing function for processing data obtained over the network.

The resource manager 21, the object recognition application 22, and the cloud sensor application 23 are applications (modules) that are executed on a predetermined data processing device within the network 12. The network 12 includes an edge environment (an edge-side cloud) close to the client device 11 injecting image data into the network 12, and a core network-side cloud (a center-side cloud). Typically, the object recognition application 22 is executed in the edge environment because it is necessary to execute the object recognition processing while satisfying predetermined delay requirements.

The client device 11 is configured including a DVS 31 and a frame-based sensor 32. However, the DVS 31 is not required and may be omitted. Two situations will be described hereinafter, namely, when the client device 11 is provided with the DVS 31, and when not provided with the DVS 31. The image capturing ranges of the DVS 31 and the frame-based sensor 32 are adjusted identically.

The DVS 31 is an event sensor that has pixels that photoelectrically convert optical signals and output pixel signals, and based on the pixel signals, output temporal luminance changes in the optical signals as event data. A general image sensor shoots images in synchronization with a vertical synchronization signal and outputs data, which is one frame's (screen's) worth of image data in the period of the vertical synchronization signal, but the DVS 31 outputs event data only at the timing when an event occurs, and is therefore an asynchronous-type or address control-type image sensor. The DVS is also called an "event-based sensor" and the like.

In the DVS 31, for example, a voltage signal corresponding to the logarithmic value of the received light amount incident on each pixel is detected as the pixel signal. The DVS 31 outputs "+1", representing a luminance change in the positive direction, when the logarithmic luminance change value represented by the pixel signal exceeds a predetermined threshold c and becomes brighter, and "-1", representing a luminance change in the negative direction, when the predetermined threshold c is exceeded and the signal becomes darker.

The event data is expressed, for example, in the following format, which is called Address-Event Representation (AER).

$$e = (x, y, p, t) \qquad ...(1)$$

In Formula (1), x and y represent the coordinates of a pixel where a luminance change has occurred. The time t of the event is a timestamp representing the time when the event occurred, and is expressed, for example, as a count value of a counter based on a predetermined clock signal in the sensor. The timestamp corresponding to the timing at which the event occurred can be said to be time information representing the (relative) time at which the event occurred, as long as the interval between events is kept the same as when the event occurred.

A polarity p represents the direction of a luminance change when a luminance change (light intensity change) exceeding the predetermined threshold c occurs as an event, and indicates whether the luminance change is in the positive direction (also called simply "positive" hereinafter) or the negative direction (also called simply "negative" hereinafter). For example, the polarity p of an event is represented by "+1" when the direction is positive and "-1" when the direction is negative.

As described above, the DVS 31 outputs only the position coordinates, polarity, and time information of a pixel that detected a luminance change. Because only net changes (differences), i.e., the position coordinates, polarity, and time information, are generated and output, and because there is no redundancy in the amount of data, the DVS 31 has a high temporal resolution, on the order of psec. Additionally, because the amount of information is small, the DVS sensor consumes less power than an image sensor which outputs image data in units of frames, and when processing data, there is no unnecessary processing load and the processing time can be shortened. High-speed, low-delay data output is therefore possible, which makes it possible to obtain the exact time at which the event occurred.

The frame-based sensor 32 corresponds to the general image sensor described above, and is a sensor that shoots images in synchronization with a vertical synchronization signal and generates image data of a moving image on a frame-by-frame basis in the period of the vertical synchronization signal. The frame-based sensor 32 can be constituted by any type of image sensor that generates frame-based image data, such as an image sensor that receives RGB light and generates RGB images, an image sensor that receives IR light and generates IR images, or the like. For the sake of simplicity, the following descriptions will refer to the frame-based sensor 32 as an "FBS 32".

The FBS 32 encodes (compresses and encodes) the image data of the moving image obtained through the capturing using a LongGOP compression method that compresses across a plurality of frames. MPEG-4 AVC, H.264, and so on are examples of encoders using the LongGOP compression method. An encoded image stream, which is an encoded moving image stream, is transferred from the client device 11 to the object recognition application 22.

The FBS 32 detects the generation of an I-frame among an I-frame, a P-frame, and a B-frame constituting a Group Of Picture (GOP), and transmits an I-frame transfer timing notification indicating when the I-frame is to be transferred to the resource manager 21. The I-frame can also be forced to be generated in a set period, but in the present embodiment, the encoder of the FBS 32 generates the I-frame when a scene change is detected in the moving image based on scene change detection parameters. Accordingly, the FBS 32 transmits the I-frame transfer timing notification to the resource manager 21 in accordance with an I-frame being generated due to a scene change in the moving image.

If the DVS 31 is implemented in the client device 11, the DVS 31 can observe the luminance change at a time granularity that cannot be detected from the frame-based image data as described above, and thus can detect the entry of an object into the image capturing range corresponding to the scene change faster than the image data of the FBS 32. The DVS 31 transmits candidate region confirmation information of the object to the resource manager 21 if the entry of a new object into the image capturing range is detected based on the event data. The candidate region confirmation information of the object includes a number of newly-required candidate regions and position information identifying each of the candidate regions in response to the new object being detected.

When the resource manager 21 obtains the I-frame transfer timing notification or the object candidate region confirmation information from the client device 11, the resources of the object recognition application 22 are reserved (secured) in the network 12 to execute the object recognition application 22. Additionally, after the resources of the object recognition application 22 have been secured, the resource manager 21 releases the resources of the object recognition application 22 when a request to release the secured resources has been communicated from the cloud sensor application 23.

The object recognition application 22 performs transport processing, decoding processing, object detection, and object recognition processing on the encoded image stream. The transport processing, decoding processing, object detection, and object recognition processing are configured as separate processing modules, and can be launched and executed independently. The transport processing module obtains the encoded image stream from the FBS 32. The decoding processing module decodes the encoded image stream. The object detection module detects an object in the decoded moving image. The object recognition processing module classifies the detected object. The modules may be individual applications. The object recognition application 22 notifies the cloud sensor application 23 of the recognition result of the object recognition processing.

The cloud sensor application 23 performs predetermined application processing based on the recognition result of the object recognition processing performed on the moving image by the object recognition application 22. After executing predetermined application processing using the recognition result, the cloud sensor application 23 communicates the resource release request to the resource manager 21.

As described above, the data processing system 1 is configured to execute, in the object recognition application 22 on the network 12, object recognition processing that recognizes an object in the moving image captured by the FBS 32.

The object recognition processing is processing which has a high load, and it is therefore necessary to eliminate unnecessary processing to the greatest extent possible. A system that constantly sends image data from the FBS 32 in baseband or as intra-encoded data and runs object recognition processing at all times regardless of whether a new object has entered wastes resources. If the encoder installed in the FBS 32 forcibly executes the I-frame generation at a set period, and if the object recognition processing is run along with the I-frame generation, the load will be slightly reduced compared to when running the object recognition processing at all times, but many resources are still wasted.

Delay requirements for object recognition processing running in an edge environment are expected to become increasingly stringent in the future. To avoid delay involved in preparation to secure resources, it is of course possible to ensure that more than the required resources are available at all times, but the depletion of resources and energy consumption due to securing excessive resources at all times may become a major problem. What is needed, therefore, is a method that to the greatest extent possible can be used to sequentially and dynamically secure resources when needed.

The data processing system 1 sequentially and dynamically secures only the necessary amount of resources, such as transport resources for transferring the encoded image stream, computational resources and storage resources necessary for executing object recognition processing, and the like, only when a new object enters the image capturing range of the FBS 32 and a scene change occurs.

Fig. 2 is a diagram illustrating the flow of typical processing in object recognition processing.

The object recognition processing is processing for identifying the position of an object from within an image and classifying the object. Methods based on Convolutional Neural Networks (CNN) have been proposed as object detection and classification processing. A typical method, called Regions with Convolutional Neural Networks (R-CNN), executes candidate region confirmation processing, feature amount extraction processing, and object classification processing in that order. The candidate region confirmation processing is processing in which a region proposal unit detects a region in an image in which an object may be present (a candidate region). The candidate region is converted into a fixed-size region. The feature amount extraction processing is processing in which a CNN feature extraction unit extracts a CNN feature amount from the candidate region. The object classification processing is processing in which an SVM classification unit performs object classification based on the extracted feature amount. The candidate region confirmation processing corresponds to object detection processing, and the feature amount extraction processing and the object classification processing correspond to the object recognition processing. In general, the feature amount extraction processing and the object classification processing are executed in parallel for each candidate region to minimize processing delays.

Since it is necessary for object recognition processing to be performed in parallel for each candidate region as described above, if it is possible to determine in advance how many new objects appear in the image of the new I-frame, it may be possible to accurately estimate the amount of processing resources of the recognizer (the inference engine) that must be executed simultaneously.

Fig. 3 illustrates a state in which the DVS 31 and the FBS 32 each generate image data and event data in time series.

The FBS 32 generates frame images FR1, FR2, FR3, and FR4 at times t10, t20, t30, and t40, respectively. The time interval of the times t10, t20, t30, and t40 corresponds to a frame capture period.

The DVS 31 generates event data at a timing at which a luminance change that occurs in response to motion of a subject or the like is detected. The bar lines indicated on the time axis represents the event data, and the bar lines are connected at the timings when event data is continuously occurring.

The encoder of the FBS 32 encodes the frame image FR1 at time t10 as the I-frame. The encoder encodes the frame image FR2 at time t20 as a P-frame by motion compensation prediction from the I-frame at time t10. The frame image FR3 at time t30 is encoded as a P-frame by motion compensation prediction from the I-frame at time t10 or the P-frame at time t20. An object a appears in the frame image FR1 at time t10, and the object a appears in, and is moving in, the frame image FR2 at time t20 and the frame image FR3 at time t30.

In addition to the object a, an object b and an object c appear in the frame image FR4 at time t40. The encoder of the FBS 32 detects that a scene change has occurred in the frame image FR4 due to the entry of the new object b and object c into the image capturing range, and encodes this in the I-frame. In other words, the encoder cancels operations such as block matching in the motion compensation prediction from the P-frame immediately before the P-frame in which the frame image FR4 was starting to be encoded, and switches to encoding as an I-frame. The timing of this detection process is essentially after the frame image FR4 at the time t40 has been captured with the FBS 32.

On the other hand, focusing on the event data generated by the DVS 31, event data EVal is event data generated as the object a included in the frame image FR1 at time t10 enters the image capturing range. Event data EVa2, EVa3, and Eva4 are each event data generated as a result of movement of the object a within the image capturing range.

It is assumed that at a predetermined time t34 within the frame capture period from time t30 to time t40, the new object b and object c that are different from the object a have entered the image capturing range. A frame image FR3' indicates the image if the FBS 32 captures the image at time t34. At time t34, the DVS 31 generates event data EVb1 produced by the entry of the object b into the image capturing range, and generates event data EVc1 produced by the entry of the object c into the image capturing range.

In general image data network transfer, the encoder detects the I-frame at time t40, encodes the I-frame (through in-frame compression or the like), and transmits the image data of the I-frame to the network 12. An object recognition server on the network 12 receives and decodes the I-frame at time t40, and detects that a new object is present only after executing the processing of a recognition engine (candidate region confirmation processing, object classification processing, and the like). Accordingly, the object recognition server does not know how many new objects are present until the candidate region confirmation processing is performed, and thus the computational resources for feature amount extraction, object classification processing, and the like within each candidate region cannot be estimated in advance. In general, when the delay requirements are stringent, simultaneous parallel processing proportional to the number of objects will be necessary.

On the other hand, if the DVS 31 is not provided, the client device 11 of the data processing system 1 traps an I-frame generation determination result based on a threshold at which the I-frame generation is determined by the encoder of the FBS 32 (a threshold for scene change detection), and transmits the I-frame transfer timing notification to the resource manager 21 immediately before the encoder starts the I-frame generation. The resource manager 21 secures the resources of the object recognition application 22 at an early stage, and prepares the object recognition application 22 to be capable of immediately starting the object recognition processing corresponding to the addition of an object. However, in this case, it is not known in advance how many new objects are present, and thus computational resources such as feature amount extraction and object classification processing for each object cannot be estimated in advance.

Fig. 4 is a diagram illustrating object detection by the DVS 31 in the frame capture period from time t30 to time 40 in Fig. 2.

Because the DVS 31 can obtain data having a temporal resolution with a fine granularity, the time transition of the candidate region of the object can be determined at a smaller time interval than the frame capture period of the FBS 32. Specifically, if the client device 11 is provided with the DVS 31, the DVS 31 can, at the point of time t34, detect candidate regions corresponding to the new object b and object c that move differently from the object a observed at time t30. This makes it possible to secure the computational resources of the object classification processing from the necessary feature amount extraction processing faster than in the above-described case of providing the FBS 32 only. That is, between time t30 and time 40, it is possible to estimate and secure the object recognition processing resources necessary in the edge environment of the network 12 in advance, which makes it possible to perform the resource securing processing safely and accurately. Because image frames are necessary for high-precision recognition processing that also uses color, the object recognition processing in the edge environment is assumed to be executed based on the I-frame produced by the scene change of the FBS 32, and the DVS 31 is treated as being used in "combination" to secure the resources necessary for the FBS 32 to recognize the I-frame in advance.

Accordingly, if the client device 11 is provided with the DVS 31, the DVS 31 can detect new objects at fine time granularity and secure the necessary resources in advance. In other words, the candidate region confirmation processing can be performed at a faster time and at a finer time granularity than when performing the processing at the timing of the I-frame generation detection. Performing the CNN feature amount extraction processing and the object classification processing based on the candidate region determination processing performed in the client device 11, which is based on the event data, makes it possible to perform the object recognition processing more quickly than the object recognition processing using only I-frame generation detection, and also makes it possible to accurately estimate the processing resources (number) of recognizers that must be executed simultaneously.

<2. Data Processing Flow>

<When DVS is Not Provided>

The data processing flow of object recognition when the client device 11 is not provided with the DVS 31 will be described with reference to Fig. 5. Separate from this processing, the FBS 32 is continually capturing an image of a subject.

First, in step S11, the FBS 32 of the client device 11 encodes the captured moving image using the Long-GOP compression method. When a scene change is detected during the encoding, the FBS 32 detects the generation of the I-frame, and transmits an I-frame transfer timing notification to the resource manager 21.

In step S12, the resource manager 21 receives an I-frame transfer timing notification from the FBS 32. The resource manager 21 secures the resources necessary for transport processing, decoding processing, and object detection, and executes the transport processing module, the decoding processing module, and the object detection module of the object recognition application 22.

In step S13, the FBS 32 uplinks (transmits) the encoded image stream to the transport processing module of the object recognition application 22.

In step S14, the object recognition application 22 executes a series of processing, from receiving the encoded image stream to object recognition. Specifically, the encoded image stream is received, decoded, and subjected to object detection in sequence by the transport processing module, the decoding processing module, and the object detection module executed therebefore. A request is then made to the resource manager 21 to secure the resources necessary for object recognition processing and to execute the modules, based on the result of the object detection. The object recognition processing module executed in response to the request executes the object recognition processing and notifies the cloud sensor application 23 of the recognition result.

In step S15, upon being notified by the object recognition application 22 that a request to secure resources necessary for object recognition processing and to execute the module has been received, the resource manager 21 secures those resources and executes the object recognition processing module. The object recognition processing module is executed in parallel a number of times equivalent to the number of candidate regions for object recognition.

In step S16, the cloud sensor application 23 performs predetermined application processing based on the recognition result of the object recognition processing transmitted from the object recognition application 22. After the predetermined application processing is executed, the cloud sensor application 23 communicates a resource release request to the resource manager 21.

In step S17, the resource manager 21 receives the resource release request from the cloud sensor application 23. The resource manager 21 stops the execution of each module of the object recognition application 22 and releases the resources. The executions of the transport processing module, the decoding processing module, the object detection module, and the object recognition processing module are stopped, and those resources are released.

<When DVS is Provided>

The data processing flow of object recognition when the client device 11 is provided with the DVS 31 will be described next with reference to Fig. 6. Separate from this processing, the DVS 31 is continually detecting events, and the FBS 32 is continually capturing an image of a subject.

First, in step S31, the DVS 31 of the client device 11 detects a new object that has entered the image capturing range, and notifies the resource manager 21 of the candidate region confirmation information of the detected object.

In step S32, the resource manager 21 receives the candidate region confirmation information of the object from the DVS 31, secures the resources necessary for object recognition processing according to the number of candidate regions, and executes the object recognition processing module of the object recognition application 22.

In step S33, the FBS 32 of the client device 11 encodes the captured moving image using the LongGOP compression method. When a scene change is detected during the encoding, the FBS 32 detects the generation of the I-frame, and transmits an I-frame transfer timing notification to the resource manager 21.

In step S34, the resource manager 21 receives an I-frame transfer timing notification from the FBS 32. The resource manager 21 secures the resources necessary for transport processing and the decoding processing, and executes the transport processing module and the decoding processing module of the object recognition application 22.

In step S35, the FBS 32 uplinks (transmits) the encoded image stream to the transport processing module of the object recognition application 22.

In step S36, the object recognition application 22 executes a series of processing, from receiving the encoded image stream to object recognition. In the processing of step S32 described above, the resources necessary for the object recognition processing have already been secured. The feature amount extraction processing and the object classification processing, which are object recognition processing, are executed in parallel a number of times equivalent to the candidate regions for object recognition, using the resources secured. The object recognition application 22 notifies the cloud sensor application 23 of the recognition result of the object recognition processing.

In step S37, the cloud sensor application 23 performs predetermined application processing based on the recognition result of the object recognition processing transmitted from the object recognition application 22. After the predetermined application processing is executed, the cloud sensor application 23 communicates a resource release request to the resource manager 21.

In step S38, the resource manager 21 receives the resource release request from the cloud sensor application 23. The resource manager 21 stops the execution of each module of the object recognition application 22 and releases the resources. The executions of the transport processing module, the decoding processing module, and the object recognition processing module are stopped, and those resources are released.

Comparing the processing of Fig. 5, in which the DVS 31 is not provided, with the processing of Fig. 6, in which the DVS 31 is provided, the processing of step S31 is added when the DVS 31 is provided. Accordingly, the processing for the resource manager 21 to secure and execute the resources of each module is divided between the processing of step S32 before receiving the I-frame transfer timing notification and the processing of step S34 after receiving the I-frame transfer timing notification.

<Comparison between Providing and Not Providing DVS>

Fig. 7 illustrates a processing flow comparing a case where the DVS 31 is not provided, as in Fig. 5, and a case where the DVS 31 is provided, as in Fig. 6, for the candidate region confirmation processing, the feature amount extraction processing, and the object classification processing, which are the specific processing in the object recognition processing.

The upper section of Fig. 7 is a detailed processing flow for a case where the DVS 31 is not provided, as in Fig. 5. The lower section of Fig. 7 is a detailed processing flow for a case where the DVS 31 is provided, as in Fig. 6.

In the processing in which the DVS 31 is not provided, in step S51, the FBS 32 uplinks (transmits) the encoded image stream to the transport processing module of the object recognition application 22.

In step S52, the object detection module of the object recognition application 22 detects a new object that has entered the image capturing range, and notifies the resource manager 21 of the candidate region confirmation information of the detected object.

In step S53, the resource manager 21 receives the candidate region confirmation information of the object from the object recognition application 22, secures the resources necessary for object recognition processing according to the number of candidate regions, and executes the processing. As a result, the resources of the feature amount extraction processing module and the object classification processing module are secured for each candidate region, and the feature amount extraction processing module and the object classification processing module are executed for each candidate region.

Then, in step S54, the feature amount extraction processing module and the object classification processing module execute the feature amount extraction processing and the object classification processing for each candidate region. The recognition result obtained as a result of the object classification processing is communicated to the cloud sensor application 23.

On the other hand, when the DVS 31 is provided, in step S71, the DVS 31 detects a new object that has entered the image capturing range, and notifies the resource manager 21 of the candidate region confirmation information of the detected object.

In step S72, the resource manager 21 receives the candidate region confirmation information of the object from the DVS 31, secures the resources necessary for object recognition processing according to the number of candidate regions, and executes the processing. The resources of the feature amount extraction processing module and the object classification processing module are secured for each candidate region, and the feature amount extraction processing module and the object classification processing module are executed for each candidate region.

In step S73, the FBS 32 uplinks (transmits) the encoded image stream to the transport processing module of the object recognition application 22.

In step S74, the feature amount extraction processing module and the object classification processing module execute the feature amount extraction processing and the object classification processing for each candidate region. The recognition result obtained as a result of the object classification processing is communicated to the cloud sensor application 23.

As is clear from comparing the upper section and lower section of Fig. 7, the processing executed by the object recognition application 22 as step S52 when the DVS 31 is provided is executed by the DVS 31 as step S71 when the DVS 31 is provided. In other words, it is not necessary to secure the resources of the object detection module that performs (processing equivalent to) the candidate region confirmation processing on the network 12. In addition, when the DVS 31 is provided, the securing of resources for the feature amount extraction processing and the object classification processing for each candidate region can be executed before receiving the encoded image stream from the FBS 32, which makes it possible to provide leeway for securing the resources, and can increase the reliability of securing the resources. The resources for the feature amount extraction processing and the object classification processing can also be secured prior to receiving the encoded image stream, which makes it possible to reduce the overall processing delay.

<3. Configuration Using Edge Application Architecture>

<Data Processing System>

Fig. 8 is a block diagram illustrating an example of the configuration of a data processing system according to another embodiment of the present technique.

A data processing system 100 illustrated in Fig. 8 is an example of a configuration for implementing the above-described data processing system 1 in the architecture for edge applications being standardized by the Third Generation Partnership Project (3GPP) - SA6, which is a standards organization for mobile communications (3GPP TS 23.558, "Architecture for enabling Edge Applications (Release 17)").

The data processing system 100 is constituted by user equipment 111, as well a resource manager 121, an ObjDetection EAS 122, and a cloud sensor application 123 located on a network (cloud) 112.

The user equipment 111 includes a DVS 131, a frame based sensor (FBS) 132, and an ObjDetection EAC 133. Like the data processing system 1 described above, the DVS 131 may be omitted.

The edge application architecture defines an Edge App Client (EAC) and an Edge App Server (EAS), and the EAS is provided to form a pair with an Application Client of the user equipment. The EAC is an application that executes client functions of a predetermined application on user equipment, and the EAS is an application that executes server functions of that application in an edge environment (an Edge Data Network).

The ObjDetection EAC 133 is constituted by the EAC of the edge application architecture, and the ObjDetection EAS 122 is constituted by the EAS of the edge application architecture. The resource manager 121 and the cloud sensor application 123 are entities newly introduced in order to implement the present technique. The resource manager 121 may be an application executed in the edge environment, or may be an application executed in the cloud.

Like the DVS 31 in Fig. 1, the DVS 131 of the user equipment 111 detects a luminance change in the same image capturing range as the FBS 132 as an event, and outputs event data to the ObjDetection EAC 133. Also, like the FBS 32 in Fig. 1, the FBS 132 captures a moving image in a frame capture period and outputs baseband image data to the ObjDetection EAC 133.

Based on the event data supplied from the DVS 131, the ObjDetection EAC 133 detects a new object that has entered the image capturing range, and notifies the resource manager 121 of the candidate region confirmation information of the detected object. The ObjDetection EAC 133 also encodes the moving image captured by the FBS 132 using the LongGOP compression method, and transmits the resulting encoded image stream to the ObjDetection EAS 122. The ObjDetection EAC 133 detects the generation of an I-frame produced by a scene change during encoding, and transmits an I-frame transfer timing notification to the resource manager 121.

The resource manager 121 secures the resources for the transport and decoding processing module of the ObjDetection EAS 122 based on the I-frame transfer timing notification from the ObjDetection EAC 133, and executes the module. The resource manager 121 also secures the resources of the feature amount extraction and object classification processing modules of the ObjDetection EAS 122 based on the candidate region confirmation information of the object communicated from either the ObjDetection EAC 133 or the ObjDetection EAS 122, and executes the modules. Furthermore, when a resource release request is issued by the cloud sensor application 123, the resource manager 121 stops the execution of the transport and decoding processing module, the feature amount extraction and object classification processing module, and the like being executed in the ObjDetection EAS 122, and releases the resources.

The ObjDetection EAS 122 performs transport processing, decoding processing, and object recognition processing (feature amount extraction processing and object classification processing) on the encoded image stream transmitted from the ObjDetection EAC 133. In addition, if the user equipment 111 is not provided with the DVS 131, the ObjDetection EAS 122 also performs object detection based on the image data after decoding, i.e., candidate region confirmation processing of the object, and notifies the resource manager 121 of the candidate region confirmation information of the object. The ObjDetection EAS 122 notifies the cloud sensor application 123 of the recognition result of the object recognition processing.

The cloud sensor application 123 performs predetermined application processing based on the recognition result of the object recognition processing performed on the moving image by the ObjDetection EAS 122. After executing predetermined application processing using the recognition result, the cloud sensor application 123 communicates the resource release request to the resource manager 121.

<User Equipment>

Fig. 9 is a block diagram illustrating an example of the specific configuration of the user equipment 111.

Descriptions of the DVS 131 and the FBS 132 will not be repeated. The ObjDetection EAC 133 of the user equipment 111 is provided with a DVS data processing module 151 that processes event data from the DVS 131, and an image frame encoder module 152 that processes image data from the FBS 132.

The DVS data processing module 151 analyzes the event data from the DVS 131, confirms a candidate region for a new object that has entered the image capturing range, and notifies the resource manager 121 running in the edge environment or the cloud of the candidate region confirmation information for the object.

The image frame encoder module 152 encodes the baseband image data from the FBS 132. At this time, the image frame encoder module 152 determines that the I-frame is to be generated using, for example, a scene change detection algorithm, and if it is determined that the I-frame is to be generated, transmits an I-frame transfer timing notification to the resource manager 121 before encoding the I-frame. The image frame encoder module 152 also transmits the encoded image stream to the ObjDetection EAS 122 running in the edge environment, which is a server-side device corresponding to the ObjDetection EAC 133. If the ObjDetection EAS 122 is notified to stop transferring the encoded image stream, the transmission of the encoded image stream is stopped.

Fig. 10 is a block diagram illustrating an example of the specific configuration of the resource manager 121.

The resource manager 121 runs in the edge environment or the cloud and manages the computational and storage resources of the ObjDetection EAS 122. The resource manager 121 is provided with a transport and decoder resource management module 171, and a feature amount extraction and classification processing resource management module 172. Note that in Fig. 10, "transport and decoder resource management module" is indicated as "transport & decoder resource management module", and "feature amount extraction and classification processing resource management module" is indicated as "feature amount extraction & classification processing resource management module", i.e., the "and" is replaced with "&". Similar notation is used in Fig. 11 and thereafter as well.

The transport and decoder resource management module 171 receives an I-frame transfer timing notification from the ObjDetection EAC 133, secures and executes the resources of a transport and decoding processing module 191 (Fig. 11) of the ObjDetection EAS 122. The resources of the transport and decoding processing module 191 are secured by the timing at which the I-frame of the encoded image stream from the ObjDetection EAC 133 is transferred. Additionally, if the user equipment 111 is not provided with the DVS 131, the transport and decoder resource management module 171 also secures the resources of a candidate region confirmation processing module 192 (Fig. 11) of the ObjDetection EAS 122 and executes the module.

The feature amount extraction and classification processing resource management module 172 receives the candidate region confirmation information of the object. The candidate region confirmation information of the object is communicated from the ObjDetection EAC 133 if the DVS 131 is provided in the user equipment 111, and from the ObjDetection EAS 122 if the DVS 131 is not provided.

If the DVS 131 is provided, the feature amount extraction and classification processing resource management module 172 secures and executes the resources of a feature amount extraction and object classification processing module 193 (Fig. 11) based on the candidate region confirmation information of the object communicated from the ObjDetection EAC 133. The feature amount extraction and classification processing resource management module 172 also transfers the communicated object candidate region confirmation information to the ObjDetection EAS 122.

On the other hand, if the DVS 131 is not provided, the feature amount extraction and classification processing resource management module 172 secures and executes the resources of the feature amount extraction and object classification processing module 193 (Fig. 11) based on the candidate region confirmation information of the object from the ObjDetection EAS 122. The resources of the feature amount extraction and object classification processing module 193 are secured such that the feature amount extraction processing and object classification processing are performed in parallel for each candidate region.

When the transport and decoder resource management module 171 receives a resource release request from the cloud sensor application 123, the transport and decoding processing module 191 of the ObjDetection EAS 122 stops execution and releases the resources. Upon receiving the resource release request from the cloud sensor application 123, the feature amount extraction and classification processing resource management module 172 stops the execution of the feature amount extraction and object classification processing module 193 of the ObjDetection EAS 122 and releases the resources. If the candidate region confirmation processing module 192 is also being executed, the feature amount extraction and classification processing resource management module 172 also stops the execution of the candidate region confirmation processing module 192 and releases the resources.

Fig. 11 is a block diagram illustrating an example of the specific configuration of the ObjDetection EAS 122.

The ObjDetection EAS 122 is provided with the transport and decoding processing module 191, the candidate region confirmation processing module 192, and the feature amount extraction and object classification processing module 193. The execution of each module of the ObjDetection EAS 122 is started or stopped by the resource manager 121, as described above. The ObjDetection EAS 122 runs in the edge environment.

The transport and decoding processing module 191 receives and decodes the encoded image stream from the ObjDetection EAC 133. The baseband image data obtained from the decoding is supplied to the feature amount extraction and object classification processing module 193, and if the DVS 131 is not provided, is also supplied to the candidate region confirmation processing module 192. When the transport and decoding processing module 191 stops its own execution, the ObjDetection EAC 133 of the user equipment 111 is notified of the stop of the transfer of the encoded image stream.

The candidate region confirmation processing module 192 is only launched and executed when the DVS 131 is not provided in the user equipment 111, and is not launched or executed when the DVS 131 is provided.

The candidate region confirmation processing module 192 performs candidate region confirmation processing using the baseband image data supplied from the transport and decoding processing module 191. In other words, the candidate region confirmation processing module 192 detects a new object in the captured image and notifies the feature amount extraction and object classification processing module 193 of the candidate region confirmation information of the detected object. The candidate region confirmation information of the object is also communicated to the feature amount extraction and classification processing resource management module 172 of the resource manager 121.

If the DVS 131 is not provided in the user equipment 111, the feature amount extraction and object classification processing module 193 is supplied with the candidate region confirmation information of the object from the candidate region confirmation processing module 192. On the other hand, if the DVS 131 is provided, the candidate region confirmation information of the object is supplied from the feature amount extraction and classification processing resource management module 172 of the resource manager 121.

The feature amount extraction and object classification processing module 193 executes the feature amount extraction processing and object classification processing in parallel for each candidate region based on (i) the baseband image data from the transport and decoding processing module 191 and (ii) the candidate region confirmation information of the object from the feature amount extraction and object classification processing module 193 or the resource manager 121. The feature amount extraction and object classification processing module 193 notifies the cloud sensor application 123 of the result of the object classification processing, i.e., the recognition result from the object recognition processing.

## <4. Data Processing Flow>

### <When DVS is Provided>

A data processing flow of object recognition when the user equipment 111 is provided with the DVS 31 will be described next with reference to Fig. 12. Separate from this processing, the DVS 131 is continually detecting events, and the FBS 132 is continually capturing an image of a subject.

First, in step S101, the DVS data processing module 151 analyzes event data supplied from the DVS 131 and detects an object in the image capturing range. The DVS data processing module 151 confirms a candidate region of the object and notifies the resource manager 121 of the candidate region confirmation information of the object.

In step S102, the feature amount extraction and classification processing resource management module 172 receives the candidate region confirmation information of the object, secures the resources of the feature amount extraction and object classification processing module 193 based on the candidate region confirmation information, and executes the module. The feature amount extraction and object classification processing module 193 is secured and executed in accordance with the number of candidate regions. Then, in step S103, the feature amount extraction and classification processing resource management module 172 communicates (transfers) the candidate region confirmation information of the object communicated from the DVS data processing module 151 to the feature amount extraction and object classification processing module 193 of the ObjDetection EAS 122.

In step S104, the image frame encoder module 152 encodes the baseband image data supplied from the FBS 132. At this time, the image frame encoder module 152 determines whether to generate an I-frame using the scene change detection algorithm. If the image frame encoder module 152 determines to generate the I-frame, an I-frame transfer timing notification is transmitted to the transport and decoder resource management module 171 of the resource manager 121 before the I-frame is encoded.

In step S105, the transport and decoder resource management module 171 receives an I-frame transfer timing notification from the image frame encoder module 152, secures the resources of a transport and decoding processing module 191 of the ObjDetection EAS 122, and executes the module. The resources of the transport and decoding processing module 191 are secured before the I-frame of the encoded image stream is transferred from the image frame encoder module 152 in the next step, that is, step S106.

In step S106, the image frame encoder module 152 uplinks (transmits), to the transport and decoding processing module 191 of the ObjDetection EAS 122, the encoded image stream in which the captured baseband image data has been encoded.

In step S107, the transport and decoding processing module 191 performs transport processing and decoding of the encoded image stream. As a result, the encoded image stream transmitted from the image frame encoder module 152 is received, decoded, and converted into baseband image data. The baseband image data is supplied to the feature amount extraction and object classification processing module 193.

In step S108, the feature amount extraction and object classification processing module 193 executes the feature amount extraction processing and object classification processing in parallel for each candidate region based on (i) the baseband image data from the transport and decoding processing module 191 and (ii) the candidate region confirmation information of the object from the feature amount extraction and classification processing resource management module 172. The feature amount extraction and object classification processing module 193 notifies the cloud sensor application 123 of the object classification processing result, i.e., the object recognition result.

In step S109, the cloud sensor application 123 performs predetermined application processing based on the recognition result of the object recognition processing from the feature amount extraction and object classification processing module 193. After executing predetermined application processing, the cloud sensor application 123 communicates the resource release request to the resource manager 121.

In step S110, the resource manager 121 receives the resource release request from the cloud sensor application 123, and releases the resources of the transport and decoding processing module 191 and the feature amount extraction and object classification processing module 193 of the ObjDetection EAS 122. More specifically, the transport and decoder resource management module 171 stops execution of the transport and decoding processing module 191, and releases the resources. The feature amount extraction and classification processing resource management module 172 stops the execution of the feature amount extraction and object classification processing module 193, and releases the resources.

In step S111, before stopping its own execution, the transport and decoding processing module 191 notifies the image frame encoder module 152 of the stop of the transfer of the encoded image stream.

Data processing of the object recognition when the user equipment 111 is provided with the DVS 31 is executed as described above.

<When DVS is Not Provided>

A data processing flow of object recognition when the user equipment 111 is not provided with the DVS 31 will be described next with reference to Fig. 13. Separate from this processing, the FBS 132 is continually capturing an image of a subject.

First, in step S131, the image frame encoder module 152 encodes the baseband image data supplied from the FBS 132. At this time, the image frame encoder module 152 determines whether to generate an I-frame using the scene change detection algorithm. If the image frame encoder module 152 determines to generate the I-frame, an I-frame transfer timing notification is transmitted to the transport and decoder resource management module 171 of the resource manager 121 before the I-frame is encoded.

In step S132, the transport and decoder resource management module 171 receives an I-frame transfer timing notification from the image frame encoder module 152, secures the resources of a transport and decoding processing module 191 of the ObjDetection EAS 122, and executes the module. The resources of the transport and decoding processing module 191 are secured before the I-frame of the encoded image stream is transferred from the image frame encoder module 152 in step S134, which will be described later.

In step S133, the transport and decoder resource management module 171 secures and executes the resources of the candidate region confirmation processing module 192.

In step S134, the image frame encoder module 152 uplinks (transmits), to the transport and decoding processing module 191 of the ObjDetection EAS 122, the encoded image stream in which the captured baseband image data has been encoded.

In step S135, the transport and decoding processing module 191 performs transport processing and decoding of the encoded image stream. As a result, the encoded image stream transmitted from the image frame encoder module 152 is received, decoded, and converted into baseband image data. The baseband image data is supplied to the candidate region confirmation processing module 192 and the feature amount extraction and object classification processing module 193.

In step S136, the candidate region confirmation processing module 192 performs candidate region confirmation processing using the baseband image data supplied from the transport and decoding processing module 191. In other words, the candidate region confirmation processing module 192 detects an object in the captured image and notifies the feature amount extraction and object classification processing module 193 of the candidate region confirmation information of the detected object. The candidate region confirmation information of the object is also communicated to the feature amount extraction and classification processing resource management module 172 of the resource manager 121.

In step S137, the feature amount extraction and classification processing resource management module 172 secures and executes the resources of the feature amount extraction and object classification processing module 193 based on the candidate region confirmation information of the object from the candidate region confirmation processing module 192.

In step S138, the feature amount extraction and object classification processing module 193 executes the feature amount extraction processing and object classification processing in parallel for each candidate region based on (i) the baseband image data from the transport and decoding processing module 191 and (ii) candidate region confirmation information of the object from the candidate region confirmation processing module 192. The feature amount extraction and object classification processing module 193 notifies the cloud sensor application 123 of object classification processing result, i.e., the object recognition result.

In step S139, the cloud sensor application 123 performs predetermined application processing based on the recognition result of the object recognition processing from the feature amount extraction and object classification processing module 193. After executing predetermined application processing, the cloud sensor application 123 communicates the resource release request to the resource manager 121.

In step S140, the resource manager 121 receives the resource release request from the cloud sensor application 123, stops the execution of each module of the ObjDetection EAS 122, and releases the resources. This stops the execution of the transport and decoding processing module 191, the candidate region confirmation processing module 192, and the feature amount extraction and object classification processing module 193, and releases the resources.

In step S141, before stopping its own execution, the transport and decoding processing module 191 notifies the image frame encoder module 152 of the stop of the transfer of the encoded image stream.

Data processing of the object recognition when the user equipment 111 is not provided with the DVS 31 is executed as described above.

## <5. Resource Management By Resource Manager>

### <Example of Resource Configuration>

Fig. 14 is a diagram illustrating an example of the configuration of a resource managed by the resource manager 121.

The resource manager 121 manages the application resources such that the ObjDetection EAS 122 runs in the edge environment (an edge data network). More specifically, the resources of the transport and decoding processing module 191, the candidate region confirmation processing module 192, and the feature amount extraction and object classification processing module 193 are each managed.

The resources of the transport and decoding processing module 191 include CPU time slots and memory necessary for executing the transport processing and decoding processing. The resources of the candidate region confirmation processing module 192 include CPU time slots and memory necessary for executing the candidate region confirmation processing. The resources of the feature amount extraction and object classification processing module 193 include CPU time slots and memory necessary for performing the feature amount extraction processing and object classification processing.

The resource manager 121 also manages the network/transport resources for transferring data between the ObjDetection EAC 133 and the ObjDetection EAS 122. These network/transport resources are, for example, a network based on a 5G mobile communication network (called a "5G network" hereinafter), a network based on the all-photonics network proposed by the IOWN Global Forum, Inc. (called an "IOWN network" hereinafter), and the like.

### <Management of Application Resources when DVS Is Not Provided>

Fig. 15 is a diagram illustrating lifecycle management of application resources of the ObjDetection EAS 122 when the DVS 131 is not provided in the user equipment 111.

When the ObjDetection EAC 133 detects the generation of an I-frame, in step S161, the I-frame transfer timing notification is transmitted to the transport and decoder resource management module 171 of the resource manager 121.

Upon receiving the I-frame transfer timing notification, in step S162, the transport and decoder resource management module 171 secures CPU time slots and memory necessary for each of the transport processing, decoding processing, and candidate region confirmation processing, and then launches the respective modules. A transport processing module 191A, a decoding processing module 191B, and the candidate region confirmation processing module 192 are launched as a result. In Fig. 15, the transport and decoding processing module 191 is illustrated as being split between the transport processing module 191A and the decoding processing module 191B.

The candidate region confirmation processing module 192 executes the candidate region confirmation processing using the baseband image data transferred from the ObjDetection EAC 133 and decoded. In the candidate region confirmation processing, the candidate region may be confirmed in a single image frame, or the candidate region may be determined using the transitions of the object through a plurality of image frames. When a plurality of image frames are used, it is necessary to wait until a baseband image frame equivalent to a plurality of frames is generated, which delays the processing.

In step S163, the candidate region confirmation processing module 192 notifies the feature amount extraction and classification processing resource management module 172 of the candidate region confirmation information of the detected object.

The feature amount extraction and classification processing resource management module 172 receives the candidate region confirmation information of the object from the candidate region confirmation processing module 192. In step S164, the feature amount extraction and classification processing resource management module 172 secures the CPU time slots and memory necessary to execute the feature amount extraction processing and classification processing for each candidate region, and causes the feature amount extraction and object classification processing module 193 to launch a number of times equivalent to the number of candidate regions.

When the cloud sensor application 123 is notified of the resource release request, the resource manager 121 stops the execution of each module of the ObjDetection EAS 122 and releases the CPU time slots and memory that had been secured. Before stopping its own execution, the transport processing module 191A notifies the ObjDetection EAC 133 to stop transferring the encoded image stream.

<Management of Application Resources when DVS Is Provided>

Fig. 16 is a diagram illustrating lifecycle management of application resources of the ObjDetection EAS 122 when the DVS 131 is provided in the user equipment 111.

In step S181, the ObjDetection EAC 133 detects a candidate region of a new object that has entered the image capturing range, and notifies the feature amount extraction and classification processing resource management module 172 of the resource manager 121 of the candidate region confirmation information of the object.

In step S182, based on the candidate region confirmation information of the object communicated from the ObjDetection EAC 133, the feature amount extraction and classification processing resource management module 172 secures the CPU time slots and memory necessary to execute the feature amount extraction and object classification processing module 193 for each candidate region, and causes the feature amount extraction and object classification processing module 193 to launch a number of times equivalent to the number of candidate regions. After the launch, each feature amount extraction and object classification processing module 193 enters a state of standing by for baseband image data.

When the ObjDetection EAC 133 detects the generation of an I-frame, in step S183, the I-frame transfer timing notification is transmitted to the transport and decoder resource management module 171 of the resource manager 121.

Upon receiving the I-frame transfer timing notification, in step S184, the transport and decoder resource management module 171 secures CPU time slots and memory necessary for the transport processing and the decoding processing, and then launches the respective modules. The transport processing module 191A and the decoding processing module 191B are launched as a result. In Fig. 16, the transport and decoding processing module 191 is illustrated as being split between the transport processing module 191A and the decoding processing module 191B.

The baseband image data transferred from the ObjDetection EAC 133 and decoded is supplied to each feature amount extraction and object classification processing module 193 that is in a standby state. Because the candidate region has been identified, if a single image frame is supplied, the feature amount extraction processing and object classification processing can be executed immediately.

The stopping of the execution of each module, and the release of the resources, are similar to those of Fig. 15, where the DVS 131 is not provided.

As described above, when the DVS 131 is provided, the feature amount extraction and object classification processing module 193 is launched in advance according to the number of candidate regions, and the feature amount extraction processing and object classification processing can be executed immediately, as opposed to a situation where the DVS 131 is not provided, and as a result, the object recognition processing can be executed at a high speed while dynamically securing resources as needed.

<Network/Transport Resource Management>

<5G Network>

Fig. 17 illustrates an example of the network/transport configuration of a 5G network.

The 5G network is constituted by a UE, an access network (AN), and a core network. The core network of a 5G system uses a service-based architecture (3GPP TS.23.501 System architecture for the 5G System (5GS)). This service-based architecture defines a Network Function(NF), which is a core network function, and NFs are connected to each other by a unified interface called a "service-based interface".

A UE 221 is user equipment (a mobile terminal). Under mobility management by an AMF 211 and session management by an SMF 212, the UE 221 accepts services by connecting to an external data network (such as an enterprise network connected by an ISP or a VPN) through packet communication (such as communication by transferring IP and Ethernet packet data units (PDUs) and the like).

An AN 222 is a wired or wireless network between the UE 221 and the core network.

The AMF 211 performs mobility management, authentication, authorization, and the like of the UE 221. The AMF 211 also controls the SMF 212. The SMF 212 performs session management for the UE 221.

A User Plane Function (UPF) 223 transfers user data. A Data Network (DN) 224 is an external network on which an application server and the like are located.

The logical connection relationship between the ObjDetection EAC 133, which is an application in the UE 221, and the ObjDetection EAS 122, which is an application in the DV 224, is referred to as "PDU session 225". The resources necessary to form this PDU session 225, such as the wireless and wired transport paths that transmit the packets, the computational resources required to process the transfer protocol, and the like, correspond to the network/transport resources managed by the resource manager 121.

Fig. 18 is a diagram illustrating lifecycle management of network/transport resources when the network/transport resources are a 5G network. Fig. 18 corresponds to the lifecycle management of application resources when the DVS 131 illustrated in Fig. 15 is not provided.

When the ObjDetection EAC 133 detects the generation of an I-frame, in step S161, the I-frame transfer timing notification is transmitted to the transport and decoder resource management module 171 of the resource manager 121.

When the I-frame transfer timing notification is received, in step S162, the transport and decoder resource management module 171 secures the CPU time slots and memory necessary for the transport processing and the decoding processing and the module is launched, as described with reference to Fig. 15. At this time, in step S162, the transport and decoder resource management module 171 also secures the resources of the PDU session 225 via the AN 222 and the UPF 223 necessary for transferring the encoded image stream from the ObjDetection EAC 133 to the ObjDetection EAS 122 with respect to the 5G system, via the 5G system API.

The resource manager 121 also releases the resources of the PDU session 225 at a timing at which the execution of each module of the ObjDetection EAS 122 is stopped and the reserved CPU time slots and memory are released.

<IOWN Network>

Fig. 19 illustrates an example of the network/transport configuration of an IOWN network.

In the IOWN network, the transport stack configuration of a virtual path 231 formed between the ObjDetection EAC 133 and the ObjDetection EAS 122 is assumed to be as illustrated in Fig. 19.

The transport stack is configured in the following order, from the lowest level: Fiber Layer (Space Division Multiplexing (SDM), Mode Division Multiplexing (MDM), or the like for a single fiber), Wavelength Division Multiplexing (WDM) in the WDM Layer, and Time Division Multiplexing (TDM) in the TDM Layer; and above these, an IP packet layer or a non-IP layer is configured as a higher-level transport layer.

The sessions implemented on this stack are basically established as being connection-oriented. In other words, the virtual path 231 is formed (network resources are secured) by Generalized Multi-Protocol Label Switching (GMPLS) between the transmitting side and the receiving side at the time of connection setup. When transferring the encoded image stream described above, the ObjDetection EAC 133 is the transmitting side and the ObjDetection EAS 122 is the receiving side, but the transmitting side secures the virtual path 231 that satisfies delivery requirements such as priority. A Resource reSerVation Protocol (RSVP) -Traffic Engineering (TE) extension for GMPLS, which is exchanged in the control plane, is used to secure the virtual path 231. The resources for configuring this virtual path 231 correspond to the network/transport resources managed by the resource manager 121.

Fig. 20 is a diagram illustrating lifecycle management of network/transport resources when the network/transport resources are an IOWN network. Fig. 20 corresponds to the lifecycle management of application resources when the DVS 131 illustrated in Fig. 15 is not provided.

When the ObjDetection EAC 133 detects the generation of an I-frame, in step S161, the I-frame transfer timing notification is transmitted to the transport and decoder resource management module 171 of the resource manager 121.

When the I-frame transfer timing notification is received, in step S162, the transport and decoder resource management module 171 secures the CPU time slots and memory necessary for the transport processing and the decoding processing and the module is launched, as described with reference to Fig. 15. At this time, in step S162, the transport and decoder resource management module 171 also secures the resources of the virtual path 231 via an equivalent to the AN and an equivalent to the UPF, necessary for transferring the encoded image stream from the ObjDetection EAC 133 to the ObjDetection EAS 122 with respect to the IOWN system, via the IOWN system API.

The resource manager 121 also releases the resources of the virtual path 231 at a timing at which the execution of each module of the ObjDetection EAS 122 is stopped and the reserved CPU time slots and memory are released.

## <6. Additional Examples of Configuration of Tracking Processing Module>

A configuration in which an application performing tracking processing of a recognized object is added after the processing of the ObjDetection EAS 122 will be described as another example of the configuration of the data processing system 100.

Fig. 21 is a block diagram illustrating an example of the configuration of a data processing system 100 in which an application that performs tracking processing is added.

Note that only the part of the data processing system 100 necessary for describing the application that performs tracking processing is illustrated in Fig. 21, and redundant descriptions will be omitted as appropriate. Fig. 21 illustrates an example of a configuration corresponding to the case where the user equipment 111 is provided with the DVS 131.

In the data processing system 100 in Fig. 21, an ObjTracking EAS 251 is added as the application for performing tracking processing. A workflow manager 252 and a workflow description 253 are also provided.

The baseband image data and the object recognition processing results are supplied to the ObjTracking EAS 251 from the ObjDetection EAS 122. It is necessary for the object recognition processing of the ObjDetection EAS 122 to be performed prior to the tracking processing performed by the ObjTracking EAS 251.

The ObjTracking EAS 251 has a tracking processing module 271 that tracks the trajectory of an object detected in the object recognition processing. The tracking processing module 271 detects how each object recognized by the ObjDetection EAS 122 is moving within the overall image and how the object will move thereafter, and notifies the cloud sensor application 123 of a trajectory tracking result. The ObjTracking EAS 251 is executed either in an edge environment or in the cloud.

The workflow manager 252 runs in an edge environment or the cloud, and manages the resources of each processing module. The workflow manager 252 is the result of changing the name of the above-mentioned resource manager 21 in line with the MPEG-I-NBMP framework (ISO 23090-8: 2018 Information technology - Coded representation of immersive media - Part 8: Network Based Media Processing).

The workflow manager 252 includes a tracking processing resource management module 281, a resource adjustment/optimization management module 282, and other processing resource management modules. The other processing resource management modules include the transport and decoder resource management module 171 and the feature amount extraction and classification processing resource management module 172 illustrated in Fig. 10.

The tracking processing resource management module 281 secures the resources of the tracking processing module 271 and executes the module. The tracking processing resource management module 281 also stops the execution of the tracking processing module 271 and releases the resources upon receiving a resource release request from the cloud sensor application 123.

The resource adjustment/optimization management module 282 refers to the workflow description (NBMP-WD) 253, in which attributes of each application are described, to adjust and optimize the execution location of each application (EAS).

In other words, the resource adjustment/optimization management module 282 analyzes the workflow description (NBMP-WD) 253 to understand the resource load situation in the edge environment and the cloud, and to determine whether to move applications with relatively relaxed delay requirements to other edge environments or the cloud, and where to move those applications.

In an edge environment where the ObjDetection EAS 122 is being executed, the load on the application running there is high and the application resources (including network/transport resources) such as CPU time slots and memory of the edge environment are limited, which means it may be difficult to execute the new ObjTracking EAS 251 in that edge environment. In addition, the tracking processing performed by ObjTracking EAS 251 may have less stringent processing delay requirements than the object recognition processing. Since the delay requirements for processing of the ObjTracking EAS 251 are relaxed compared to the ObjDetection EAS 122, if the application resources necessary to execute the ObjTracking EAS 251 in the surrounding edge environment or the cloud can be secured, the resource adjustment/optimization management module 282 adjusts the resources so as to move the ObjTracking EAS 251 to another environment and execute the ObjTracking EAS 251 there. The workflow description (NBMP-WD) 253 describes a predetermined application (processing module) as an attribute of an application having conditions such as "may be executed in another edge environment or cloud if the processing delay requirements are relaxed for other applications."

A data processing flow including resource adjustment/optimization of the ObjTracking EAS 251 for performing tracking processing will be described with reference to Fig. 22.

First, in step S201, the DVS data processing module 151 of the ObjDetection EAC 133 analyzes event data supplied from the DVS 131 and detects an object in the image capturing range. The ObjDetection EAC 133 confirms a candidate region for the object, and notifies the feature amount extraction and classification processing resource management module 172 and the tracking processing resource management module 281 of the workflow manager 252 of the candidate region confirmation information of the object.

In step S202, the feature amount extraction and classification processing resource management module 172 receives the candidate region confirmation information of the object, secures the resources of the candidate region confirmation processing module 192 of the ObjDetection EAS 122 based on the candidate region confirmation information, and executes the module. The tracking processing resource management module 281 also receives the candidate region confirmation information of the object and, based on the candidate region confirmation information, secures the resources of the tracking processing module 271 of the ObjTracking EAS 251 and executes the module.

In step S203, the image frame encoder module 152 of the ObjDetection EAC 133 encodes the baseband image data supplied from the FBS 132. At this time, the image frame encoder module 152 determines whether to generate an I-frame using the scene change detection algorithm. If the image frame encoder module 152 determines to generate the I-frame, an I-frame transfer timing notification is transmitted to the transport and decoder resource management module 171 of the workflow manager 252 before the I-frame is encoded.

In step S204, the transport and decoder resource management module 171 receives an I-frame transfer timing notification from the image frame encoder module 152, secures the resources of a transport and decoding processing module 191 of the ObjDetection EAS 122, and executes the module. The resources of the transport and decoding processing module 191 are secured before the I-frame of the encoded image stream is transferred from the image frame encoder module 152 in step S208, which will be described later.

In step S205, one or both of the transport and decoding processing module 191 of the ObjDetection EAS 122 or the tracking processing module 271 of the ObjTracking EAS 251 detects that the resources cannot be secured and executed due to increased resource load, and notifies the resource adjustment/optimization management module 282.

In step S206, the resource adjustment/optimization management module 282 of the workflow manager 252 analyzes the workflow description 253 to determine whether to move the ObjTracking EAS 251 having relaxed delay requirements to the cloud, or to an edge environment other than the edge environment that was the target for execution earlier. The workflow description 253 may be provided from the ObjDetection EAC 133, or from an entity that manages the workflow description of the service provider.

Upon determining to move the ObjTracking EAS 251, the resource adjustment/optimization management module 282 determines another edge environment or cloud to serve as the destination, and communicates an instruction to move the ObjTracking EAS 251 to the tracking processing resource management module 281.

In step S207, the tracking processing resource management module 281 receives, from the resource adjustment/optimization management module 282, an instruction to move the ObjTracking EAS 251 and the destination environment. The tracking processing resource management module 281 then secures (re-secures) the resources of the tracking processing module 271 of the ObjTracking EAS 251, and executes the module, in the specified destination environment. The ObjTracking EAS 251 is executed in the re-secured environment.

In step S208, the image frame encoder module 152 of the ObjDetection EAC 133 uplinks (transmits), to the transport and decoding processing module 191 of the ObjDetection EAS 122, the encoded image stream in which the captured baseband image data has been encoded.

In step S209, the transport and decoding processing module 191 of the ObjDetection EAS 122 performs transport processing and decoding of the encoded image stream. The baseband image data of the entire image capturing range obtained from the decoding is supplied to the tracking processing module 271 of the ObjTracking EAS 251.

In step S210, the feature amount extraction and object classification processing module 193 of the ObjDetection EAS 122 executes the feature amount extraction processing and the object classification processing in parallel for each candidate region based on the baseband image data and the candidate region confirmation information of the object. The feature amount extraction and object classification processing module 193 notifies the tracking processing module 271 and the cloud sensor application 123 of object classification processing result, i.e., the object recognition result.

The tracking processing module 271 executes tracking processing to track a trajectory of an object of the image and notifies the cloud sensor application 123 of the trajectory tracking result.

As described thus far, the resource adjustment/optimization management module 282 can adjust and optimize resources by referring to the workflow description 253 and moving applications with relaxed delay requirements to other edge environments or the cloud, depending on the resource load situation.

Fig. 23 illustrates an example of the structure of the workflow description 253.

The workflow description 253 includes a General Descriptor, an Input Descriptor, an Output Descriptor, a Processing Descriptor, and a Requirements Descriptor. Of these, the Requirements Descriptor attribute introduces "relativeProcessingDelayAcceptable". "relativeProcessingDelayAcceptable" can be specified as True or False, indicated whether processing delay is permitted or not.

<7. Summary>

The data processing system 100 transfers image data obtained by the user equipment 111, which is the client-side device, to the network (cloud) 112 and executes object recognition processing on the network 112. The recognition result of the object recognition processing is transmitted to the cloud sensor application 123 and used for predetermined application processing.

The object recognition processing is processing which has a high load, and it is therefore necessary to eliminate unnecessary processing to the greatest extent possible. A system which transfers the image data obtained by the user equipment 111 to the network 112, including the edge environment and the cloud, and runs the object recognition processing at all times regardless of whether a new object has entered, is a waste of resources. Cognitive applications with stringent delay requirements are expected to increase in the future, and resource depletion and energy consumption may become major problems. What is needed, therefore, is a method that can be used to sequentially and dynamically secure resources when needed.

In the above-described data processing systems 1 and 100, resources necessary for object recognition processing are secured in the edge environment on the network along with the generation of an I-frame in response to a scene change in a moving image. In other words, the resources are secured at the timing at which a new object is detected, corresponding to the scene change, and the object recognition processing is then run. Through this, resources can be sequentially and dynamically secured as necessary.

When the client-side device is provided with a DVS (the DVS 31 or the DVS 131) that outputs temporal luminance changes in optical signals as event data, new objects can be detected at time granularity that cannot be detected with frame-based image data, and thus resources can be secured faster than when using a frame-based image sensor (the FBS 32 or the FBS 132) alone. Because the number of new objects can also be detected, the resource load can also be predicted, which makes it possible to prepare the resources more appropriately.

<8. Other Use Cases>

The present technique can also be applied to processing aside from the above-described object recognition processing in images. For example, the present technique can also be applied in systems for providing medical and health care based on biometric information measured in real time by a body sensor.

A body sensor network is a type of sensor network formed by sensors located on the surface of the body (a wearable) and within the body (an implant). Recently, systems that connects such sensor groups to external monitoring/analysis applications over a mobile network, an in-hospital network (a local or public 5G network), or the like and provide medical and health care based on real-time biometric information such as electrocardiograms, arterial oxygen saturation, and body temperature are quickly becoming widespread.

For example, examples of detecting acute or chronic diseases by measuring the flow and concentration of red blood cells in microcirculation (capillary networks, arteriolae such as the afferent and efferent arteries thereof, venules) using an event based sensor are being introduced as a medical application for a DVS. In the future, the present technique will be able to be applied to emergency treatment systems that use image sensors such as frame based sensors or event based sensors to detect and recognize not only the flow of red blood cells in the blood vessels, but also foreign bodies (objects of shapes or colors different from red blood cells), and if those objects are dangerous, immediately take action (such as capturing or pulverizing the objects). For example, in the case of red blood cells flowing through a blood vessel of a certain thickness, shapes simply move within the blood vessel in a nearly uniform state; as such, even if a new red blood cell enters the image capturing range, that red blood cell will not be detected as a scene change by the encoder, but will instead be regarded as "movement" of a certain object in the block matching of motion prediction, and no scene change will occur (it will be processed as a P-frame or a B-frame). On the other hand, when a foreign body such as a clot which has separated enters the image capturing range, the encoder detects a scene change. In that case, it is necessary to immediately detect and recognize the "foreign body" different from red blood cells, and trigger emergency treatment according to the specifics of that foreign body. Processing such as detecting intravascular foreign bodies is not a common occurrence, and thus constantly applying foreign body recognition processing based on the frame image of the image sensor would be a major waste of resources. If the spread of local 5G networks throughout individual hospitals leads to biometric information sensor networks being broadly deployed in the future, and if the excess network resources and computational resources are secured and utilized so as to be able to recognize and process the huge amounts of image frame data and the like constantly collected from the body sensors of patients and respond to emergencies, a huge amount of power/energy will be constantly wasted. By applying the present technique, the necessary resources can be appropriately secured in a timely manner only when a foreign body is likely to be detected, and the resources can be released immediately once the processing is complete.

The present technique can greatly contribute to solving energy consumption problems in data centers and the efficient utilization of resources of sensor applications in the cloud, not only for medical sensor networks, but also for large-scale sensor networks deployed in a variety of industrial fields.

<9. Example of Configuration of Computer>

The above-described series of processing can also be executed by hardware or software. When the series of processing is executed by software, a program that configures the software is installed on a computer. Here, the computer includes a microcomputer embedded in dedicated hardware or includes, for example, a general-purpose personal computer in which various functions can be executed by installing various programs.

Fig. 24 is a block diagram illustrating an example of the hardware configuration of a computer that executes the series of processing described above according to a program.

In the computer, a central processing unit (CPU) 301, a read only memory (ROM) 302, and a random access memory (RAM) 303 are connected to each other by a bus 304.

An input/output interface 305 is further connected to the bus 304. An input unit 306, an output unit 307, a storage unit 308, a communication unit 309, and a drive 310 are connected to the input/output interface 305.

The input unit 306 includes a keyboard, a mouse, a microphone, a touch panel, an input terminal, and the like. The output unit 307 includes a display, a speaker, an output terminal, and the like. The storage unit 308 includes a hard disk, a RAM disk, non-volatile memory, and the like. The communication unit 309 is a network interface or the like. The drive 310 drives a removable recording medium 311 such as a magnetic disk, an optical disc, a magneto-optical disk, a semiconductor memory, or the like.

In the computer configured as described above, for example, the CPU 301 performs the above-described series of processing by loading a program stored in the storage unit 308 to the RAM 303 via the input/output interface 305 and the bus 304 and executing the program, for example. Data and the like necessary for the CPU 301 to execute the various kinds of processing is also stored as appropriate in the RAM 303.

The program executed by the computer (the CPU 301) can be recorded on, for example, the removable recording medium 311, as a packaged medium, and provided in such a state. The program can also be provided over a wired or wireless transmission medium such as a local area network, the Internet, or digital satellite broadcasting.

In the computer, by mounting the removable recording medium 311 in the drive 310, the program can be installed in the storage unit 308 through the input/output interface 305. The program can be received by the communication unit 309 via a wired or wireless transfer medium to be installed in the storage unit 308. In addition, the program may be installed in advance in the ROM 302 or the storage unit 308.

In the present specification, "system" means a set of a plurality of constituent elements (devices, modules (components), or the like), and it does not matter whether or not all the constituent elements are provided in the same housing. Therefore, a plurality of devices contained in separate housings and connected over a network, and one device in which a plurality of modules are contained in one housing, are both "systems".

Additionally, in the present specification, the steps indicated in each flowchart may of course be performed chronologically according to the order described therein, but need not absolutely be performed chronologically, and may instead be performed in parallel or at the required timing, such as when called.

The embodiments of the present technique are not limited to the above-described embodiments, and various modifications can be made without departing from the essential spirit of the present technique.

For example, in the foregoing embodiments, an application constituted by a plurality of modules may be constituted by a single module, or may be further subdivided into a plurality of modules.

In addition, each step described with reference to the foregoing flowcharts can be executed by a single device, or in a distributed manner by a plurality of devices. Furthermore, when a single step includes a plurality of processes, the plurality of processes included in the single step can be executed by a single device, or in a distributed manner by a plurality of devices.

Note that the effects described in the present specification are merely illustrative and not limiting, and effects aside from those described in the present specification may be obtained as well.

The present technique can be configured as follows.

(1) A data processing device including:
a management module that secures, on a network, a resource necessary for object recognition processing on image data transferred from an image sensor in accordance with a timing at which the image sensor generates an I-frame.

(2) The data processing device according to (1),

wherein the management module secures the resource in accordance with a timing of generation of an I-frame in response to a scene change detected by an encoder that encodes the image data.
(3) The data processing device according to (1) or (2),
wherein the management module executes an object recognition processing application using the resource secured.
(4) The data processing device according to (3),

wherein the object recognition processing includes candidate region confirmation processing, and
the management module secures the resource in correspondence with a number of candidate regions detected in the candidate region confirmation processing.

(5) The data processing device according to any one of (1) to (4),
wherein a device having the image sensor is provided with an event sensor that outputs, as event data, a temporal luminance change in an optical signal, and the management module secures the resource at a timing at which a new object, corresponding to the generation of the I-frame based on the event data, has been detected.
(6) The data processing device according to (5),
wherein the management module secures the resource at a timing of receiving candidate region confirmation information of the new object from the event sensor.
(7) The data processing device according to (6),

wherein the candidate region confirmation information of the new object includes a number of candidate regions of the new object, and
the management module secures the resource in correspondence with the number of candidate regions of the new object.

(8) The data processing device according to any one of (1) to (7),
wherein the management module further secures, on the network, a resource necessary for tracking processing to track an object detected in the object recognition processing.
(9) The data processing device according to any one of (1) to (8),
wherein the management module further adjusts an execution location of an application in accordance with a load status of the resource and delay requirements of processing.
(10) The data processing device according to any one of (1) to (9),
wherein based on a resource release request, the management module releases the resource secured.
(11) A data processing method including:
securing, on a network, a resource necessary for object recognition processing on image data transferred from an image sensor in accordance with a timing at which the image sensor generates an I-frame, the securing being performed by a data processing device.
(12) A data processing system including:

a client device that transfers image data generated by an image sensor to a network; and
a management module that secures, on a network, a resource necessary for object recognition processing on the image data in accordance with a timing at which the image sensor generates an I-frame.

(13) The data processing system according to (12),

wherein the client device also includes an event sensor that outputs, as event data, a temporal luminance change in an optical signal, and
the management module secures the resource at a timing at which a new object, corresponding to the generation of the I-frame based on the event data, has been detected.

[Reference Signs List]

1: Data processing system
11: Client device
12: Network
21: Resource manager
22: Object recognition application
23: Cloud sensor application
32: Frame-based sensor
100: Data processing system
111: User equipment
112: Network
121: Resource manager, 123: Cloud sensor application
151: DVS data processing module
152: Image frame encoder module
171: Decoder resource management module
172: Classification processing resource management module
191: Decoding processing module
191A: Transport processing module
191B: Decoding processing module
192: Candidate region confirmation processing module
193: Object classification processing module
225: PDU session
231: Virtual path
252: Workflow manager

253: Workflow description
271: Tracking processing module
281: Tracking processing resource management module
282: Resource adjustment/optimization management module
301: CPU
302: ROM
303: RAM
306: Input unit
307: Output unit
308: Storage unit
309: Communication unit
310: Drive

## Claims

1. A data processing device comprising:
a management module that secures, on a network, a resource necessary for object recognition processing on image data transferred from an image sensor in accordance with a timing at which the image sensor generates an I-frame.

2. The data processing device according to claim 1, wherein the management module secures the resource in accordance with a timing of generation of an I-frame in response to a scene change detected by an encoder that encodes the image data.

3. The data processing device according to claim 1, wherein the management module executes an object recognition processing application using the resource secured.

4. The data processing device according to claim 3,

   wherein the object recognition processing includes candidate region confirmation processing, and
   the management module secures the resource in correspondence with a number of candidate regions detected in the candidate region confirmation processing.

5. The data processing device according to claim 1,

   wherein a device having the image sensor is provided with an event sensor that outputs, as event data, a temporal luminance change in an optical signal, and
   the management module secures the resource at a timing at which a new object, corresponding to the generation of the I-frame based on the event data, has been detected.

6. The data processing device according to claim 5, wherein the management module secures the resource at a timing of receiving candidate region confirmation information of the new object from the event sensor.

7. The data processing device according to claim 6,

   wherein the candidate region confirmation information of the new object includes a number of candidate regions of the new object, and
   the management module secures the resource in correspondence with the number of candidate regions of the new object.

8. The data processing device according to claim 1, wherein the management module further secures, on the network, a resource necessary for tracking processing to track an object detected in the object recognition processing.

9. The data processing device according to claim 1,

   wherein the management module further adjusts an execution location of an application in accordance with a load status of the resource and
   delay requirements of processing.

10. The data processing device according to claim 1, wherein based on a resource release request, the management module releases the resource secured.

11. A data processing method comprising:
securing, on a network, a resource necessary for object recognition processing on image data transferred from an image sensor in accordance with a timing at which the image sensor generates an I-frame, the securing being performed by a data processing device.

12. A data processing system comprising:

   a client device that transfers image data generated by an image sensor to a network; and
   a management module that secures, on a network, a resource necessary for object recognition processing on the image data in accordance with a timing at which the image sensor generates an I-frame.

13. The data processing system according to claim 12,

   wherein the client device also includes an event sensor that outputs, as event data, a temporal luminance change in an optical signal, and
   the management module secures the resource at a timing at which a new object, corresponding to the generation of the I-frame based on the event data, has been detected.

Fig. 1

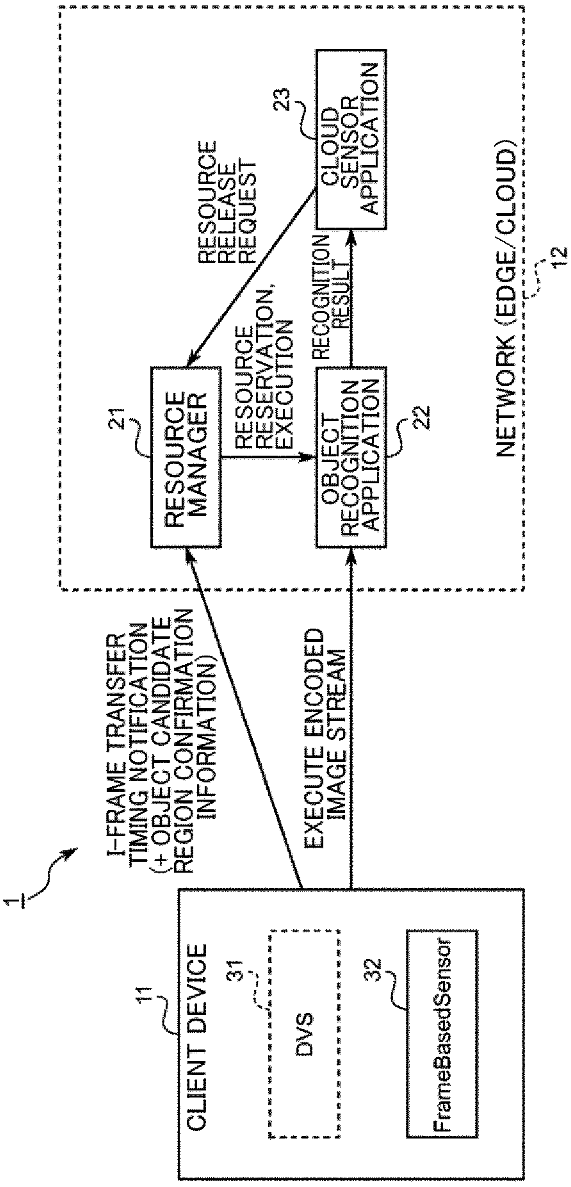
1
CLIENT DEVICE
11
31
DVS
32
FrameBasedSensor
I-FRAME TRANSFER TIMING NOTIFICATION (+ OBJECT CANDIDATE REGION CONFIRMATION INFORMATION)
EXECUTE ENCODED IMAGE STREAM
21
RESOURCE MANAGER
RESOURCE RESERVATION, EXECUTION
22
OBJECT RECOGNITION APPLICATION
RECOGNITION RESULT
23
CLOUD SENSOR APPLICATION
RESOURCE RELEASE REQUEST
NETWORK (EDGE/CLOUD)
12

Fig. 2

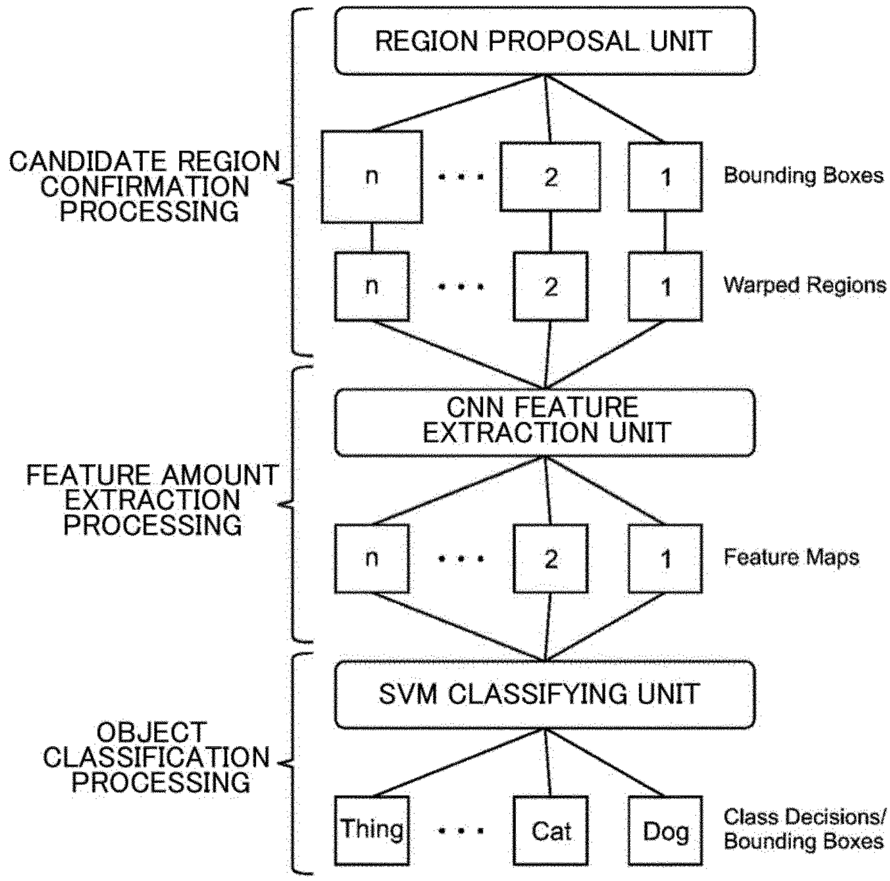
REGION PROPOSAL UNIT
CANDIDATE REGION CONFIRMATION PROCESSING
n
2
1
Bounding Boxes
n
2
1
Warped Regions
CNN FEATURE EXTRACTION UNIT
FEATURE AMOUNT EXTRACTION PROCESSING
n
2
1
Feature Maps
SVM CLASSIFYING UNIT
OBJECT CLASSIFICATION PROCESSING
Thing
Cat
Dog
Class Decisions/ Bounding Boxes

Fig. 3

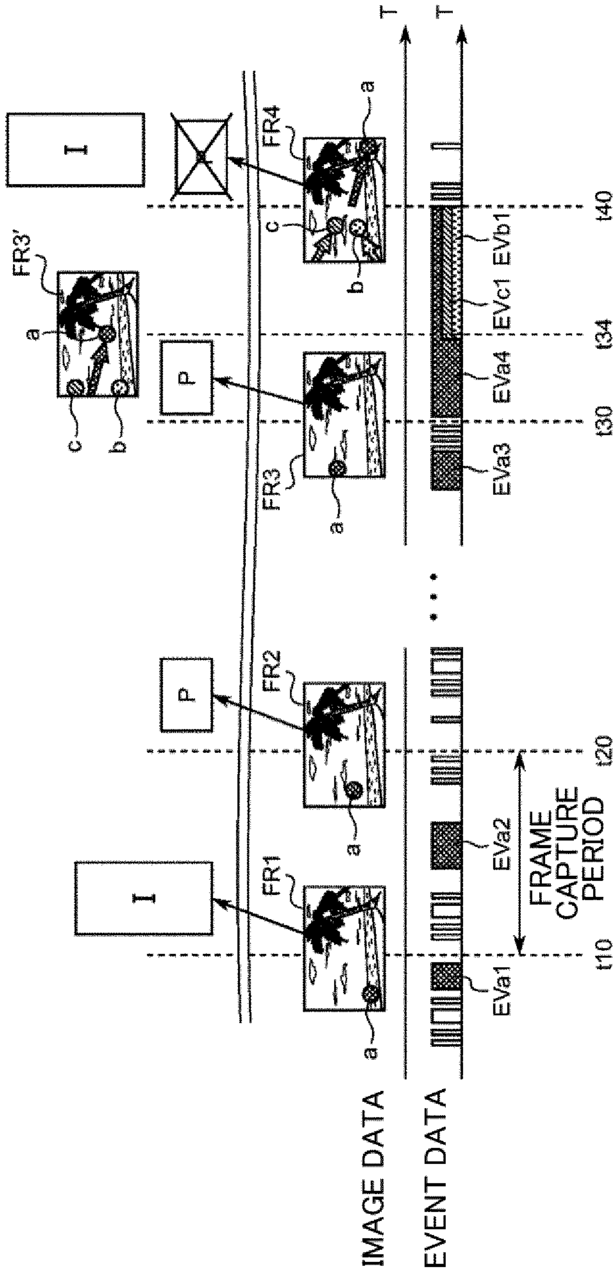
IMAGE DATA
EVENT DATA
FR1
FR2
FR3
FR3'
FR4
a
b
c
I
P
T
EVa1
EVa2
EVa3
EVa4
EVc1
EVb1
t10
t20
t30
t34
t40
FRAME CAPTURE PERIOD

Fig. 4

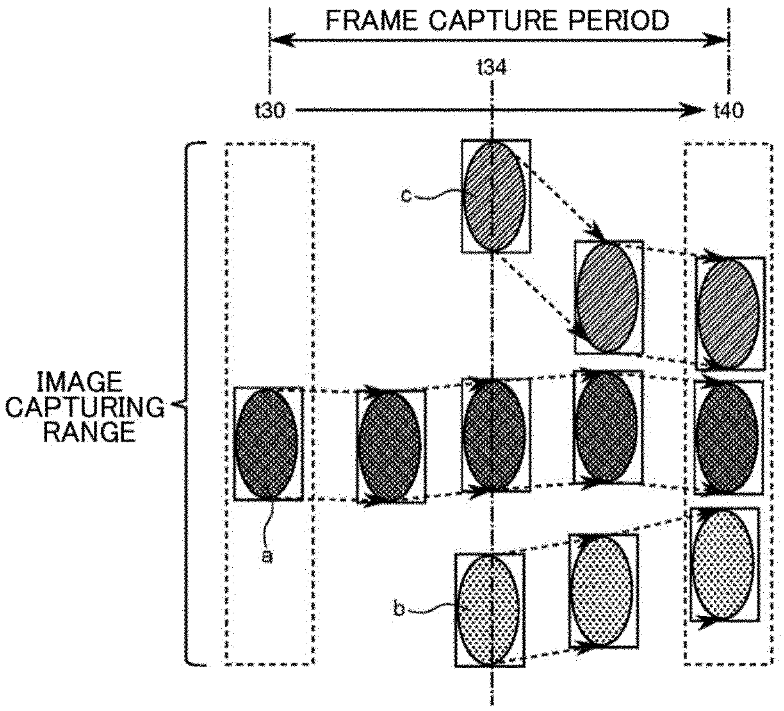

Fig. 5

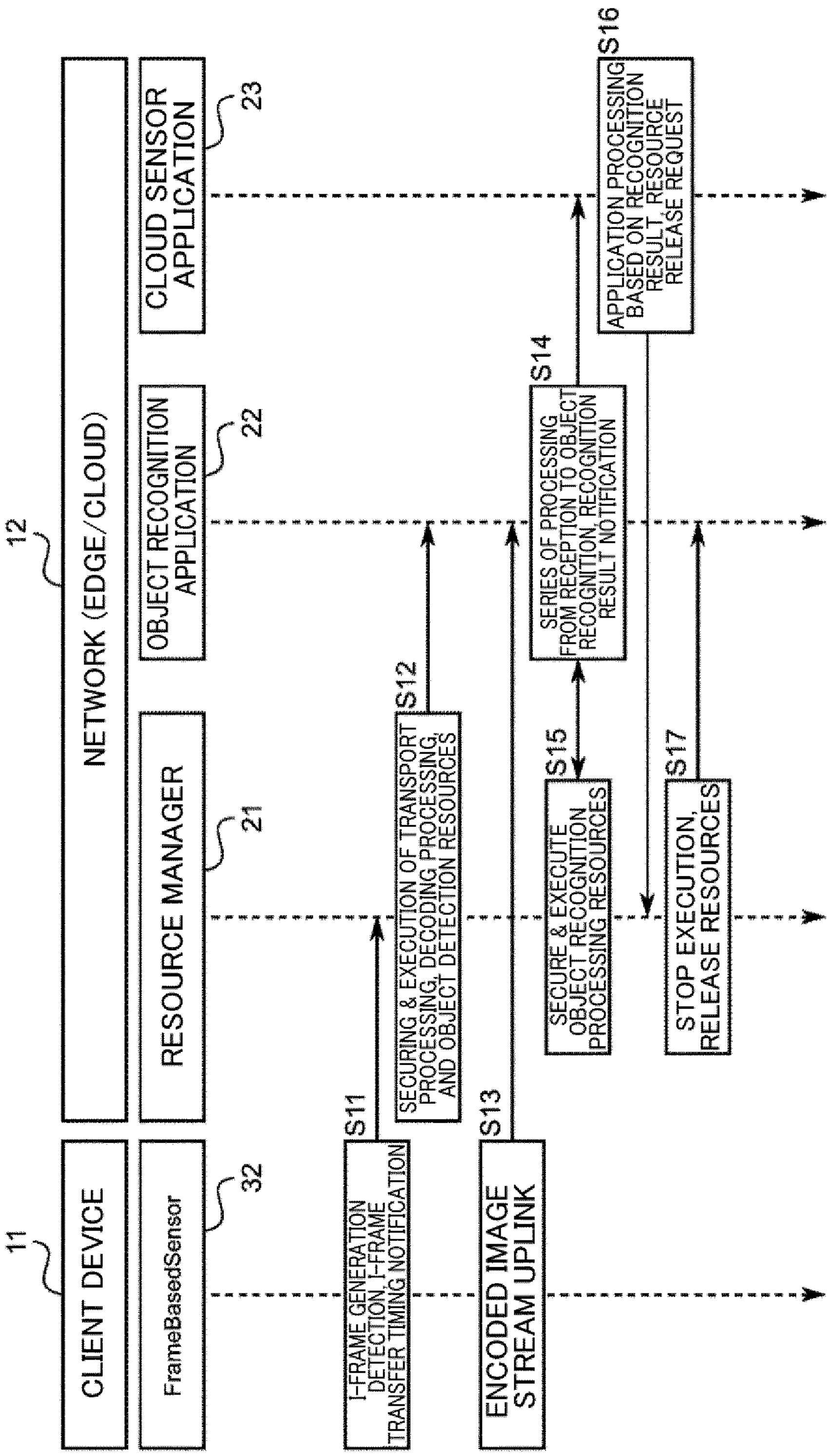
CLIENT DEVICE
11
FrameBasedSensor
32
NETWORK (EDGE/CLOUD)
12
RESOURCE MANAGER
21
OBJECT RECOGNITION APPLICATION
22
CLOUD SENSOR APPLICATION
23
S11
I-FRAME GENERATION DETECTION, I-FRAME TRANSFER TIMING NOTIFICATION
S12
SECURING & EXECUTION OF TRANSPORT PROCESSING, DECODING PROCESSING, AND OBJECT DETECTION RESOURCES
S13
ENCODED IMAGE STREAM UPLINK
S14
SERIES OF PROCESSING FROM RECEPTION TO OBJECT RECOGNITION, RECOGNITION RESULT NOTIFICATION
S15
SECURE & EXECUTE OBJECT RECOGNITION PROCESSING RESOURCES
S16
APPLICATION PROCESSING BASED ON RECOGNITION RESULT, RESOURCE RELEASE REQUEST
S17
STOP EXECUTION, RELEASE RESOURCES

Fig. 6

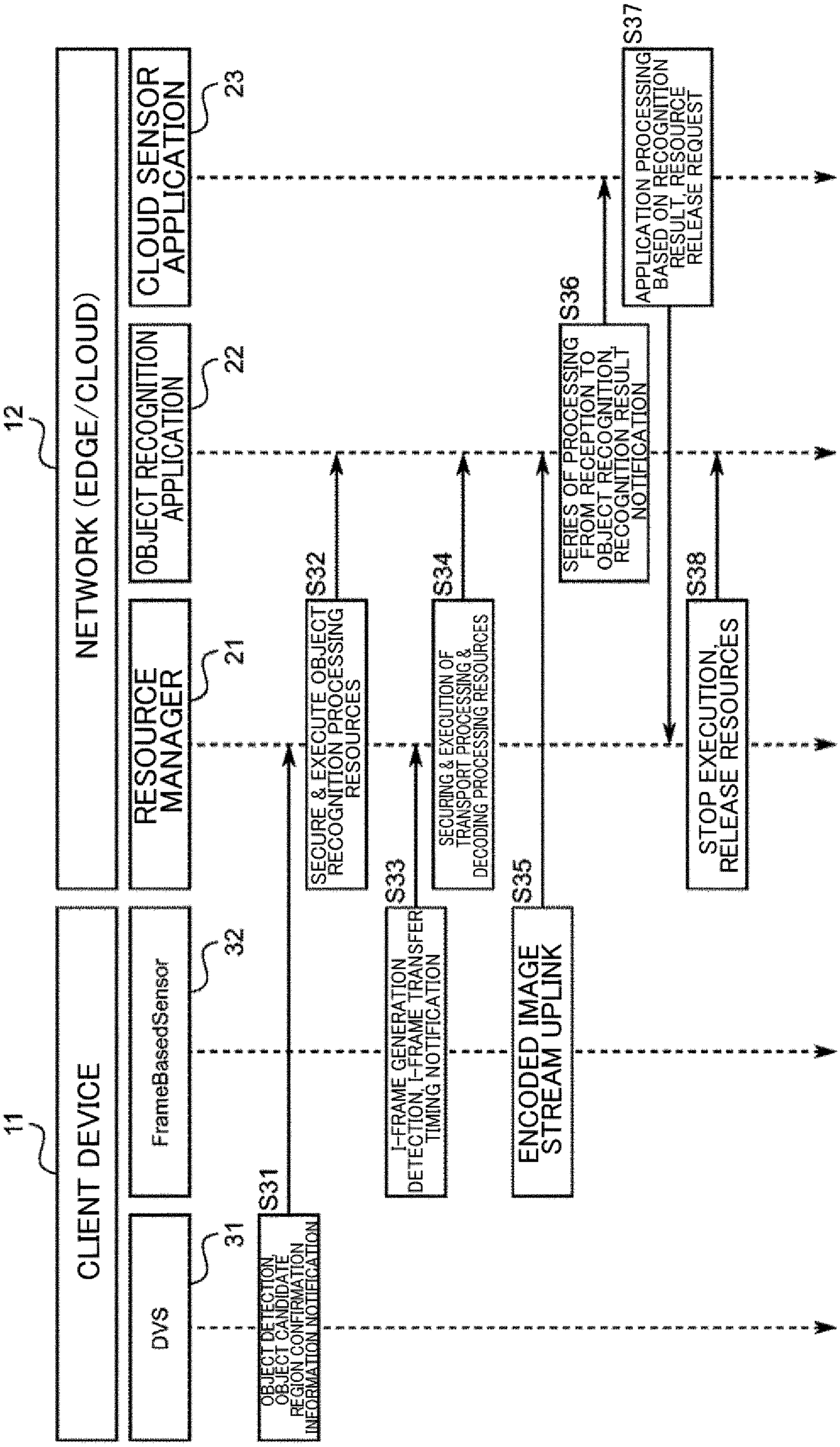

CLIENT DEVICE
11
DVS
31
FrameBasedSensor
32
NETWORK (EDGE/CLOUD)
12
RESOURCE MANAGER
21
OBJECT RECOGNITION APPLICATION
22
CLOUD SENSOR APPLICATION
23
S31
OBJECT DETECTION, OBJECT CANDIDATE REGION CONFIRMATION INFORMATION NOTIFICATION
S32
SECURE & EXECUTE OBJECT RECOGNITION PROCESSING RESOURCES
S33
I-FRAME GENERATION DETECTION, I-FRAME TRANSFER TIMING NOTIFICATION
S34
SECURING & EXECUTION OF TRANSPORT PROCESSING & DECODING PROCESSING RESOURCES
S35
ENCODED IMAGE STREAM UPLINK
S36
SERIES OF PROCESSING FROM RECEPTION TO OBJECT RECOGNITION, RECOGNITION RESULT NOTIFICATION
S37
APPLICATION PROCESSING BASED ON RECOGNITION RESULT, RESOURCE RELEASE REQUEST
S38
STOP EXECUTION, RELEASE RESOURCES

Fig. 7

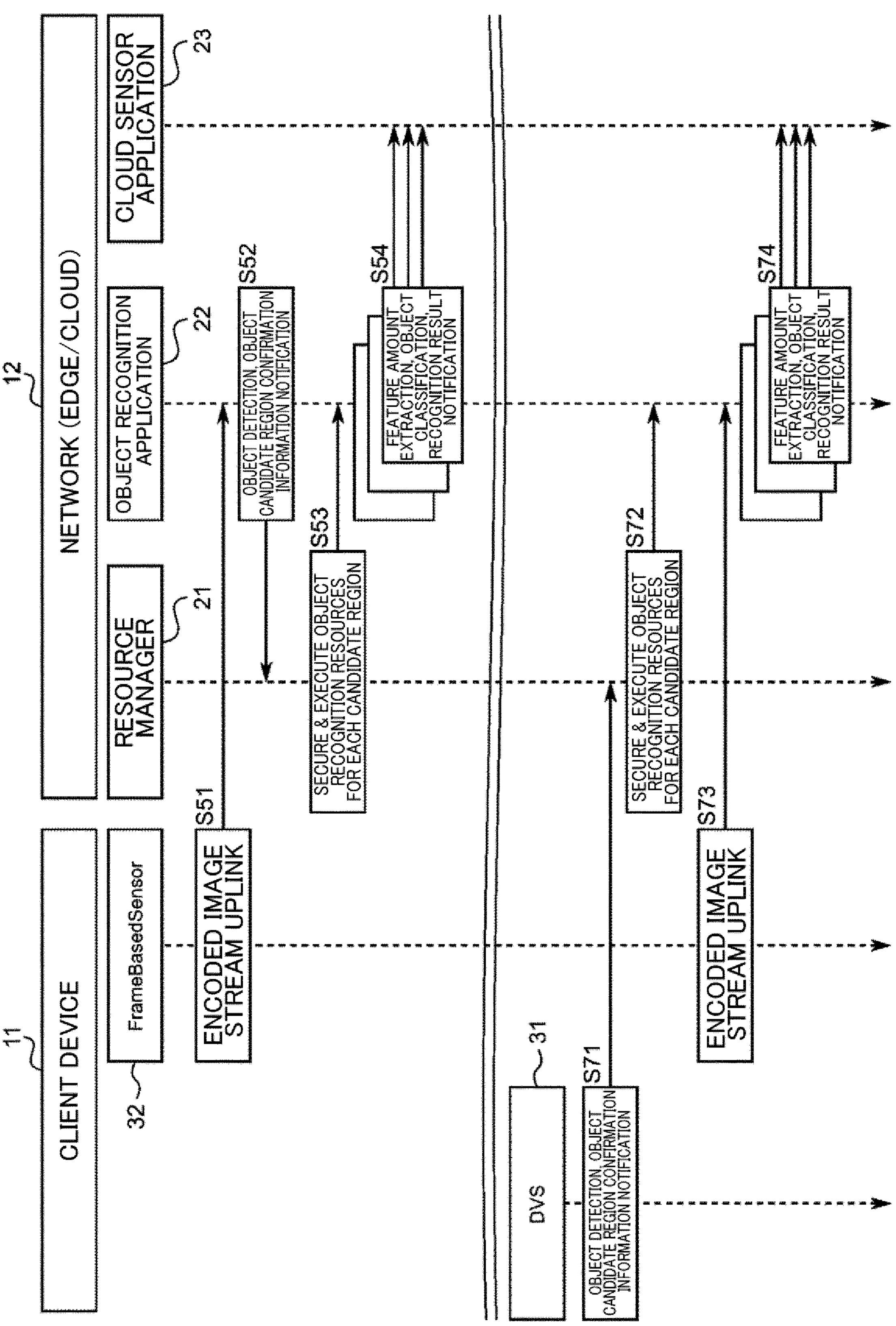

CLIENT DEVICE
11
FrameBasedSensor
32
ENCODED IMAGE STREAM UPLINK
S51
DVS
31
S71
OBJECT DETECTION, OBJECT CANDIDATE REGION CONFIRMATION INFORMATION NOTIFICATION
ENCODED IMAGE STREAM UPLINK
S73
NETWORK (EDGE/CLOUD)
12
RESOURCE MANAGER
21
OBJECT RECOGNITION APPLICATION
22
CLOUD SENSOR APPLICATION
23
S52
OBJECT DETECTION, OBJECT CANDIDATE REGION CONFIRMATION INFORMATION NOTIFICATION
S53
SECURE & EXECUTE OBJECT RECOGNITION RESOURCES FOR EACH CANDIDATE REGION
S54
FEATURE AMOUNT EXTRACTION, OBJECT CLASSIFICATION, RECOGNITION RESULT NOTIFICATION
S72
SECURE & EXECUTE OBJECT RECOGNITION RESOURCES FOR EACH CANDIDATE REGION
S74
FEATURE AMOUNT EXTRACTION, OBJECT CLASSIFICATION, RECOGNITION RESULT NOTIFICATION

Fig. 8

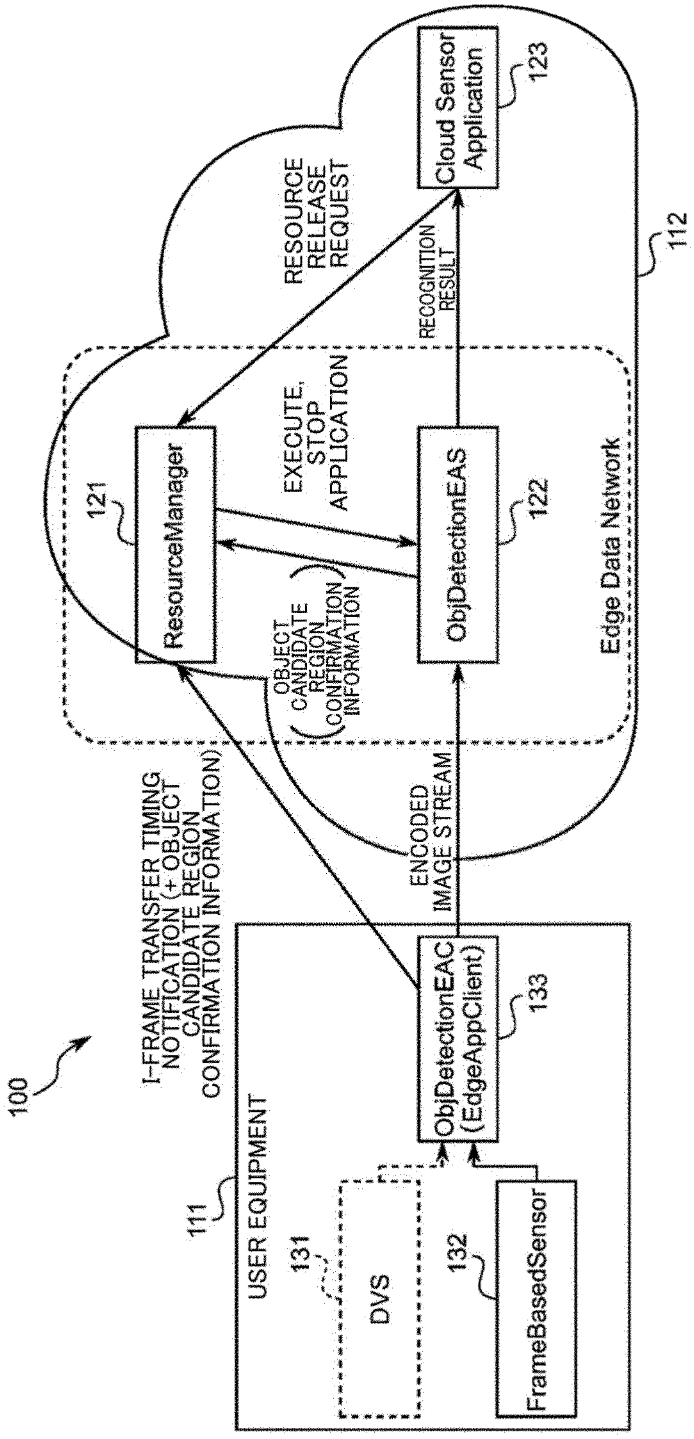
100
I-FRAME TRANSFER TIMING NOTIFICATION (+ OBJECT CANDIDATE REGION CONFIRMATION INFORMATION)
USER EQUIPMENT
111
131
DVS
132
FrameBasedSensor
ObjDetectionEAC (EdgeAppClient)
133
ENCODED IMAGE STREAM
OBJECT CANDIDATE REGION CONFIRMATION INFORMATION
ResourceManager
121
EXECUTE, STOP APPLICATION
ObjDetectionEAS
122
Edge Data Network
RESOURCE RELEASE REQUEST
RECOGNITION RESULT
Cloud Sensor Application
123
112

Fig. 9

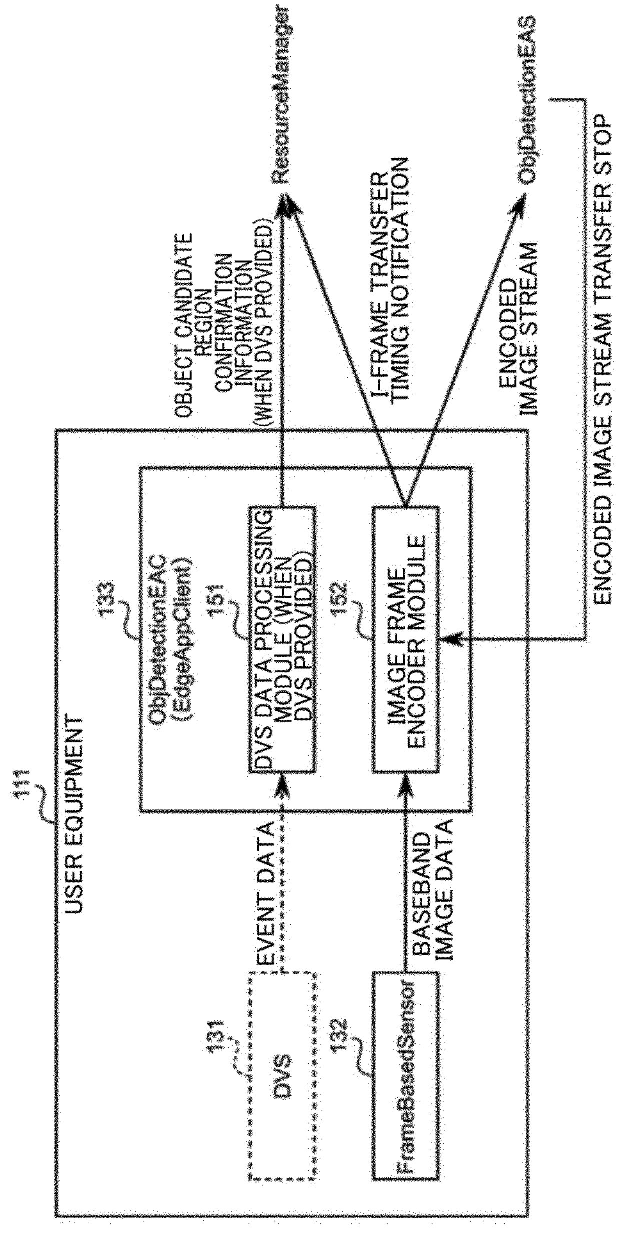
111
USER EQUIPMENT
131
DVS
132
FrameBasedSensor
EVENT DATA
BASEBAND IMAGE DATA
133
ObjDetectionEAC (EdgeAppClient)
151
DVS DATA PROCESSING MODULE (WHEN DVS PROVIDED)
152
IMAGE FRAME ENCODER MODULE
OBJECT CANDIDATE REGION CONFIRMATION INFORMATION (WHEN DVS PROVIDED)
I-FRAME TRANSFER TIMING NOTIFICATION
ENCODED IMAGE STREAM
ResourceManager
ObjDetectionEAS
ENCODED IMAGE STREAM TRANSFER STOP

Fig. 10

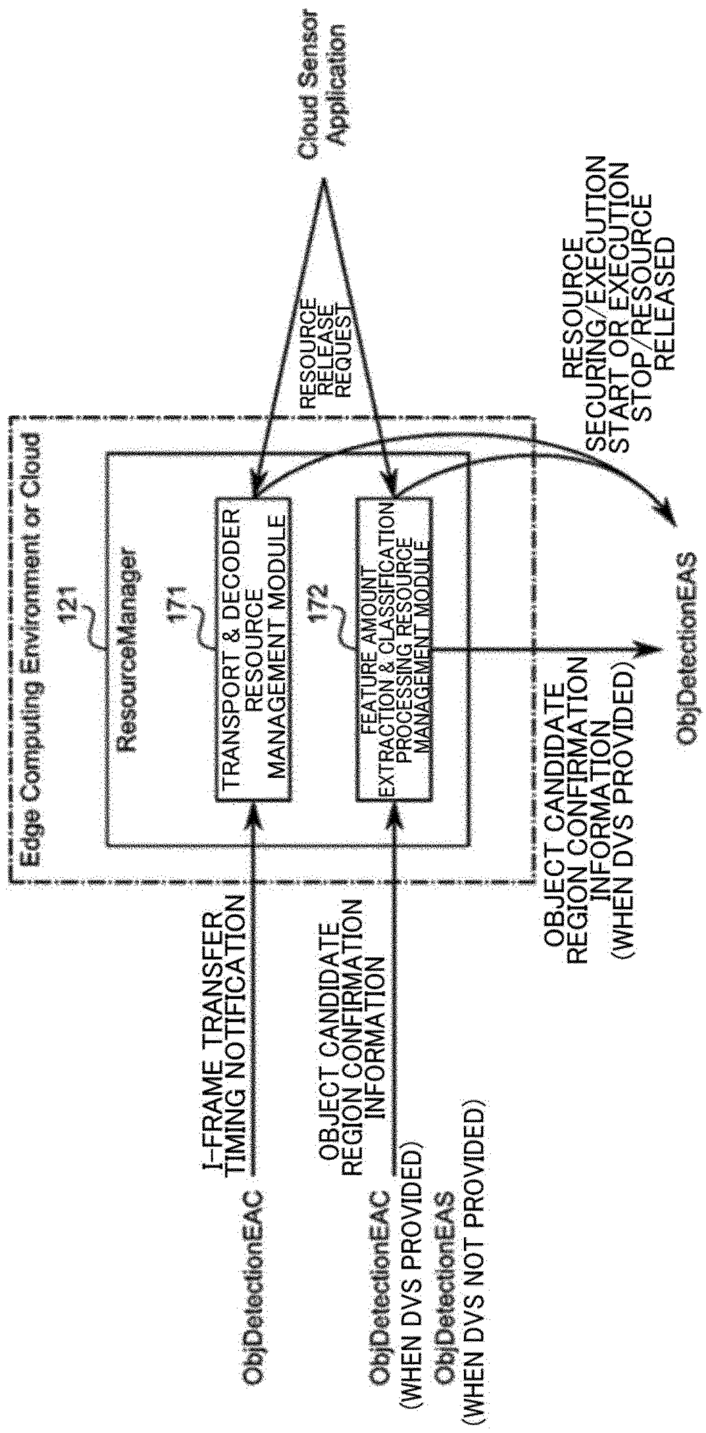
Edge Computing Environment or Cloud
121
ResourceManager
171
TRANSPORT & DECODER RESOURCE MANAGEMENT MODULE
172
FEATURE AMOUNT EXTRACTION & CLASSIFICATION PROCESSING RESOURCE MANAGEMENT MODULE
Cloud Sensor Application
RESOURCE RELEASE REQUEST
RESOURCE SECURING/EXECUTION START OR EXECUTION STOP/RESOURCE RELEASED
ObjDetectionEAC
I-FRAME TRANSFER TIMING NOTIFICATION
ObjDetectionEAC (WHEN DVS PROVIDED)
ObjDetectionEAS (WHEN DVS NOT PROVIDED)
OBJECT CANDIDATE REGION CONFIRMATION INFORMATION
OBJECT CANDIDATE REGION CONFIRMATION INFORMATION (WHEN DVS PROVIDED)
ObjDetectionEAS

Fig. 11

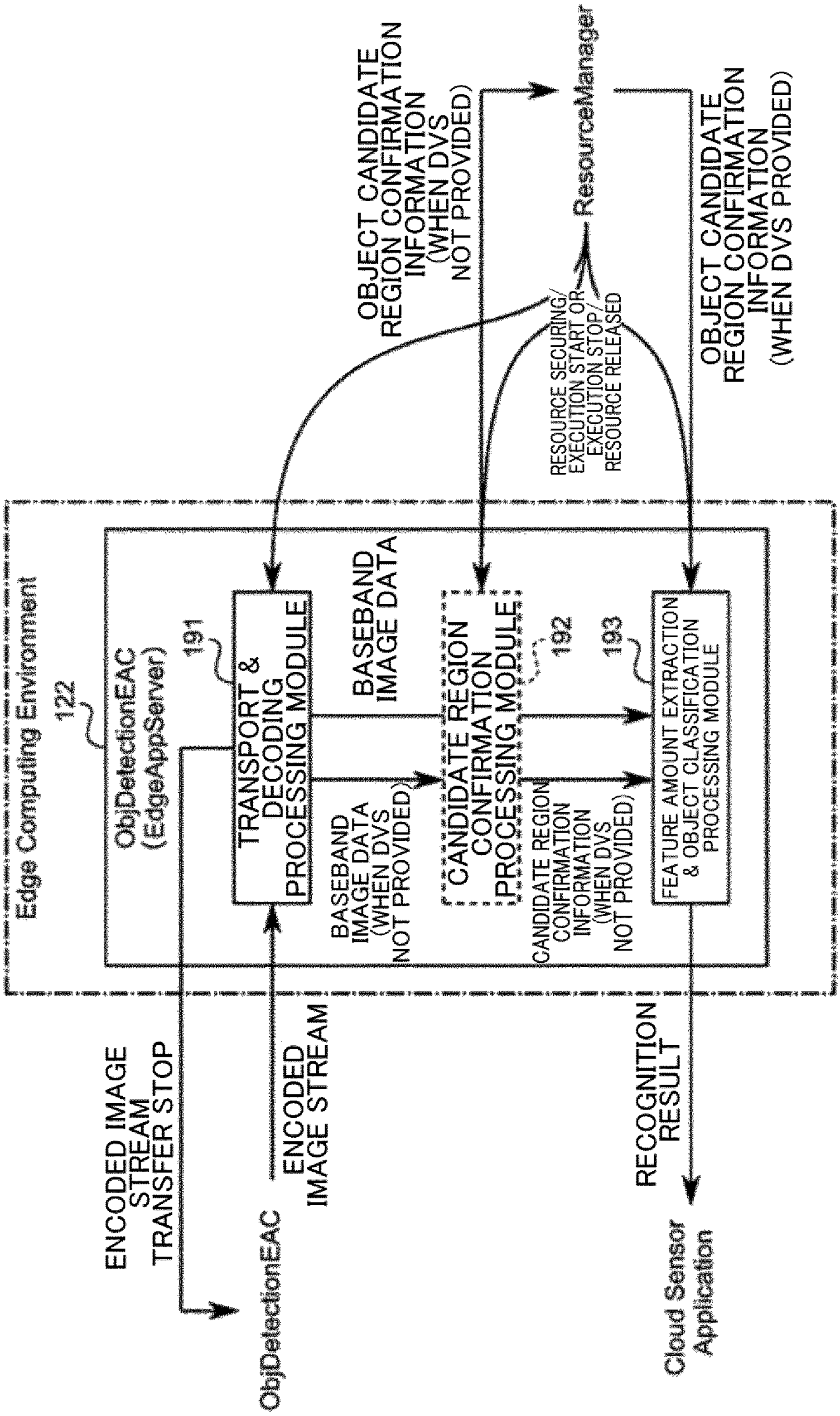
Edge Computing Environment
122
ObjDetectionEAC
(EdgeAppServer)
191
TRANSPORT & DECODING PROCESSING MODULE
BASEBAND IMAGE DATA
BASEBAND IMAGE DATA (WHEN DVS NOT PROVIDED)
CANDIDATE REGION CONFIRMATION PROCESSING MODULE
192
193
CANDIDATE REGION CONFIRMATION INFORMATION (WHEN DVS NOT PROVIDED)
FEATURE AMOUNT EXTRACTION & OBJECT CLASSIFICATION PROCESSING MODULE
OBJECT CANDIDATE REGION CONMATION INFORMATION (WHEN DVS NOT PROVIDED)
ResourceManager
RESOURCE SECURING/ EXECUTION START OR EXECUTION STOP/ RESOURCE RELEASED
OBJECT CANDIDATE REGION CONFIRMATION INFORMATION (WHEN DVS PROVIDED)
ENCODED IMAGE STREAM TRANSFER STOP
ObjDetectionEAC
ENCODED IMAGE STREAM
RECOGNITION RESULT
Cloud Sensor Application

Fig. 12

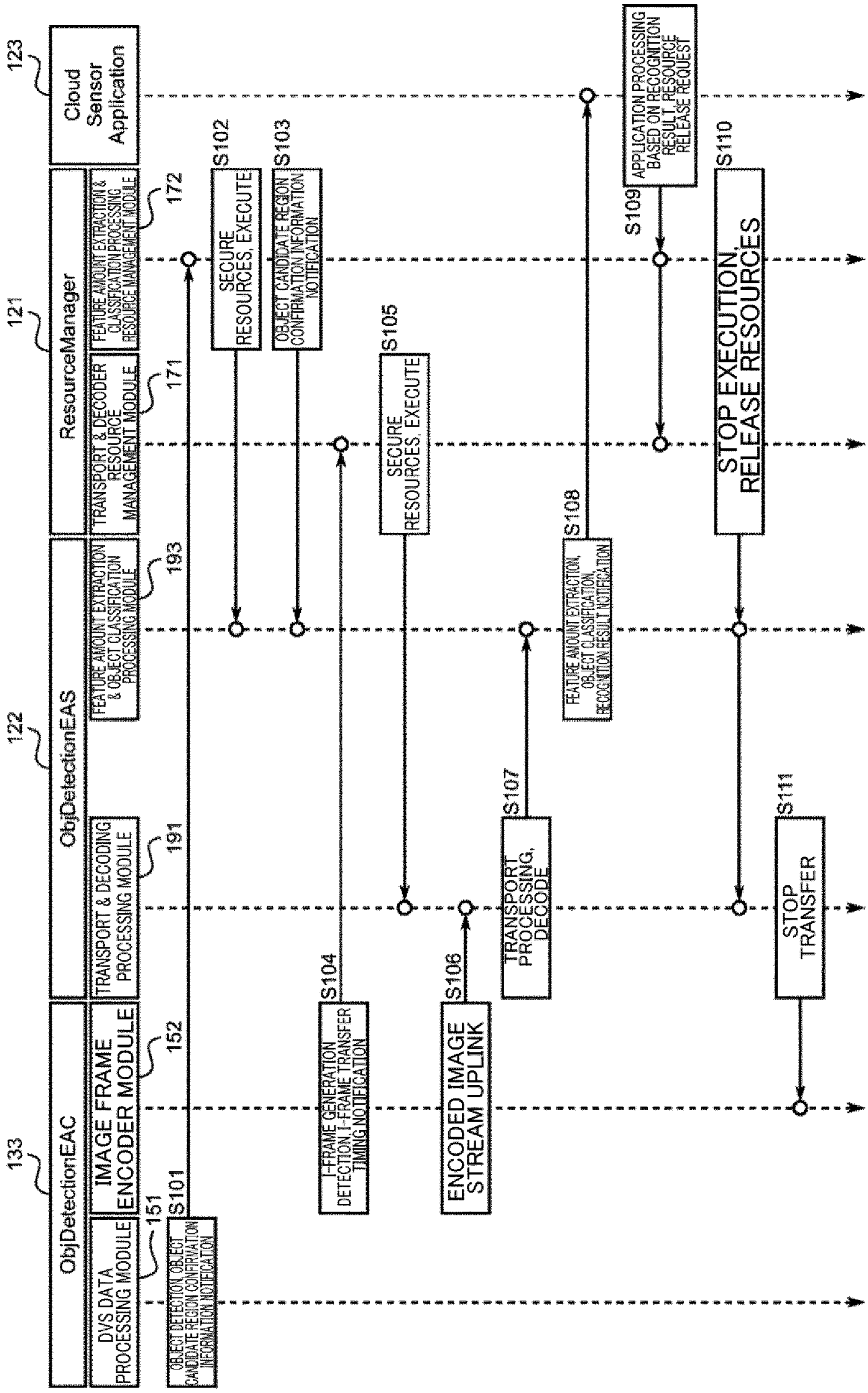

123
Cloud Sensor Application
121
ResourceManager
FEATURE AMOUNT EXTRACTION & CLASSIFICATION PROCESSING RESOURCE MANAGEMENT MODULE
172
TRANSPORT & DECODER RESOURCE MANAGEMENT MODULE
171
122
ObjDetectionEAS
FEATURE AMOUNT EXTRACTION & OBJECT CLASSIFICATION PROCESSING MODULE
193
TRANSPORT & DECODING PROCESSING MODULE
191
133
ObjDetectionEAC
IMAGE FRAME ENCODER MODULE
152
DVS DATA PROCESSING MODULE
151
S101
OBJECT DETECTION, OBJECT CANDIDATE REGION CONFIRMATION INFORMATION NOTIFICATION
S102
SECURE RESOURCES, EXECUTE
S103
OBJECT CANDIDATE REGION CONFIRMATION INFORMATION NOTIFICATION
S104
I-FRAME GENERATION DETECTION, I-FRAME TRANSFER TIMING NOTIFICATION
S105
SECURE RESOURCES, EXECUTE
S106
ENCODED IMAGE STREAM UPLINK
S107
TRANSPORT PROCESSING, DECODE
S108
FEATURE AMOUNT EXTRACTION, OBJECT CLASSIFICATION, RECOGNITION RESULT NOTIFICATION
S109
APPLICATION PROCESSING BASED ON RECOGNITION RESULT, RESOURCE RELEASE REQUEST
S110
STOP EXECUTION, RELEASE RESOURCES
S111
STOP TRANSFER

Fig. 13

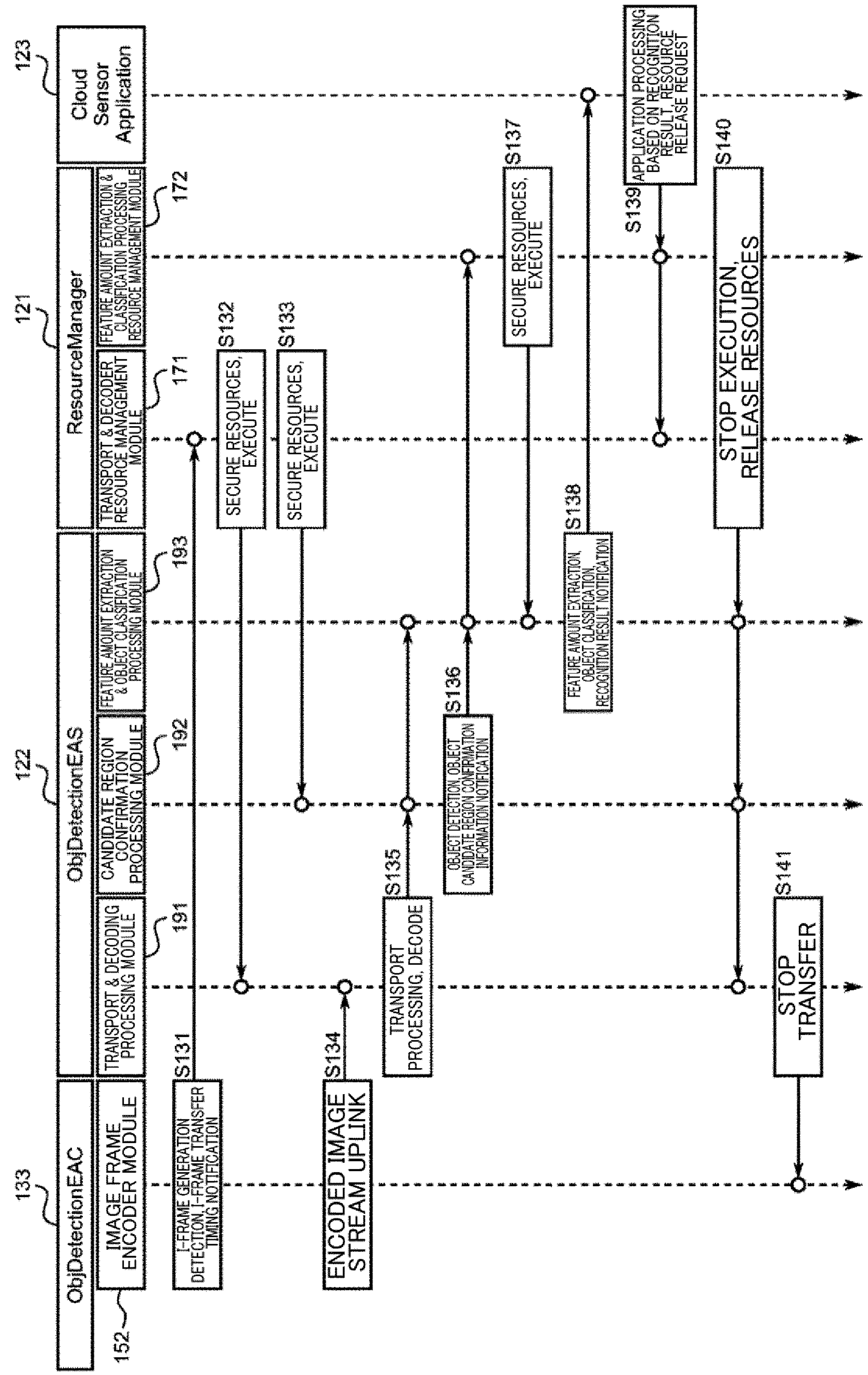
123
Cloud Sensor Application
121
ResourceManager
TRANSPORT & DECODER RESOURCE MANAGEMENT MODULE
171
FEATURE AMOUNT EXTRACTION & CLASSIFICATION PROCESSING RESOURCE MANAGEMENT MODULE
172
122
ObjDetectionEAS
TRANSPORT & DECODING PROCESSING MODULE
191
CANDIDATE REGION CONFIRMATION PROCESSING MODULE
192
FEATURE AMOUNT EXTRACTION & OBJECT CLASSIFICATION PROCESSING MODULE
193
133
ObjDetectionEAC
IMAGE FRAME ENCODER MODULE
152
S131
I-FRAME GENERATION DETECTION, I-FRAME TRANSFER TIMING NOTIFICATION
S132
SECURE RESOURCES, EXECUTE
S133
SECURE RESOURCES, EXECUTE
S134
ENCODED IMAGE STREAM UPLINK
S135
TRANSPORT PROCESSING, DECODE
S136
OBJECT DETECTION, OBJECT CANDIDATE REGION CONFIRMATION INFORMATION NOTIFICATION
S137
SECURE RESOURCES, EXECUTE
S138
FEATURE AMOUNT EXTRACTION, OBJECT CLASSIFICATION, RECOGNITION RESULT NOTIFICATION
S139
APPLICATION PROCESSING BASED ON RECOGNITION RESULT, RESOURCE RELEASE REQUEST
S140
STOP EXECUTION, RELEASE RESOURCES
S141
STOP TRANSFER

Fig. 14

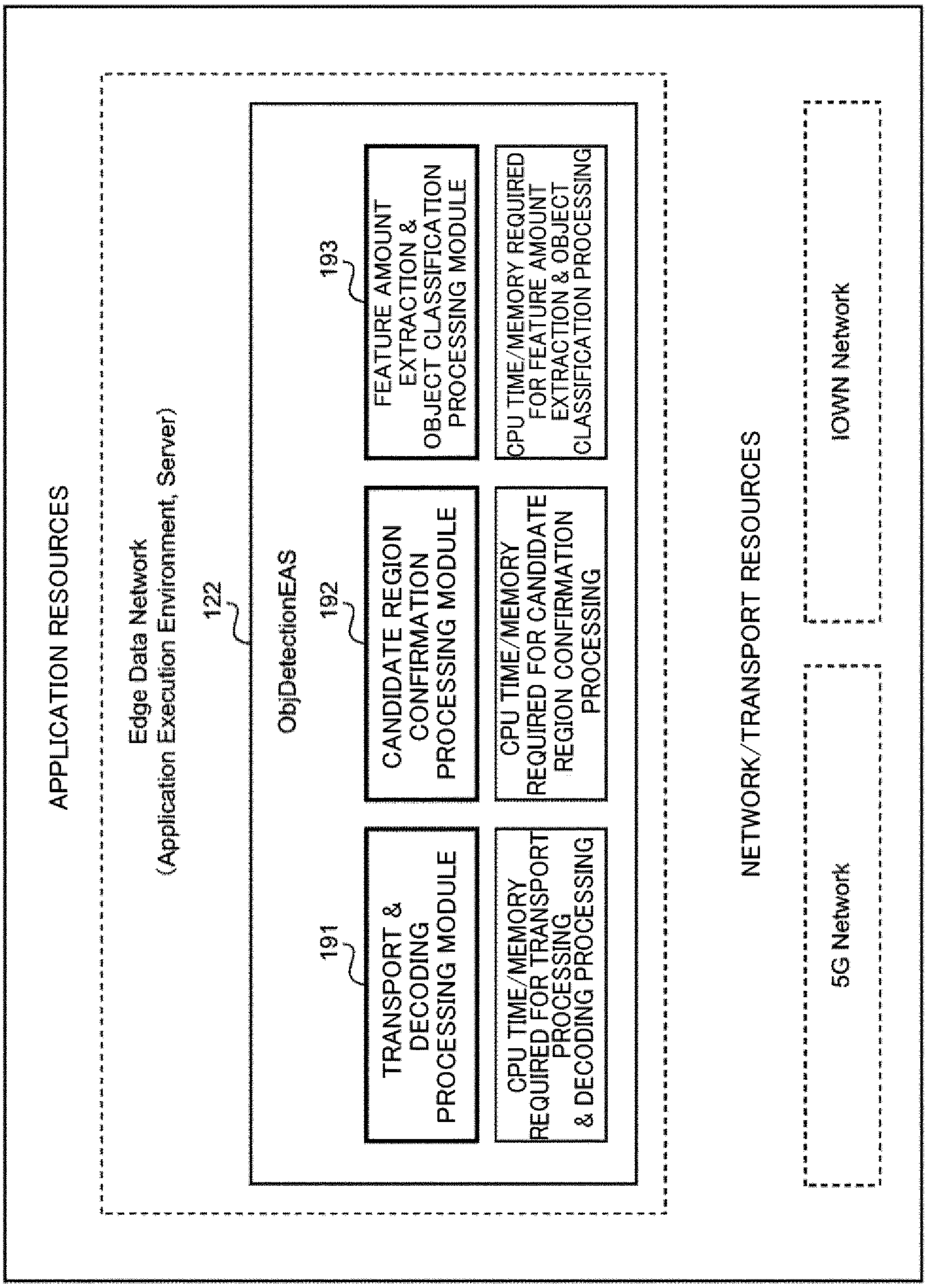
APPLICATION RESOURCES
Edge Data Network
(Application Execution Environment, Server)
122
ObjDetectionEAS
191
TRANSPORT & DECODING PROCESSING MODULE
192
CANDIDATE REGION CONFIRMATION PROCESSING MODULE
193
FEATURE AMOUNT EXTRACTION & OBJECT CLASSIFICATION PROCESSING MODULE
CPU TIME/MEMORY REQUIRED FOR TRANSPORT PROCESSING & DECODING PROCESSING
CPU TIME/MEMORY REQUIRED FOR CANDIDATE REGION CONFIRMATION PROCESSING
CPU TIME/MEMORY REQUIRED FOR FEATURE AMOUNT EXTRACTION & OBJECT CLASSIFICATION PROCESSING
NETWORK/TRANSPORT RESOURCES
5G Network
IOWN Network

Fig. 15

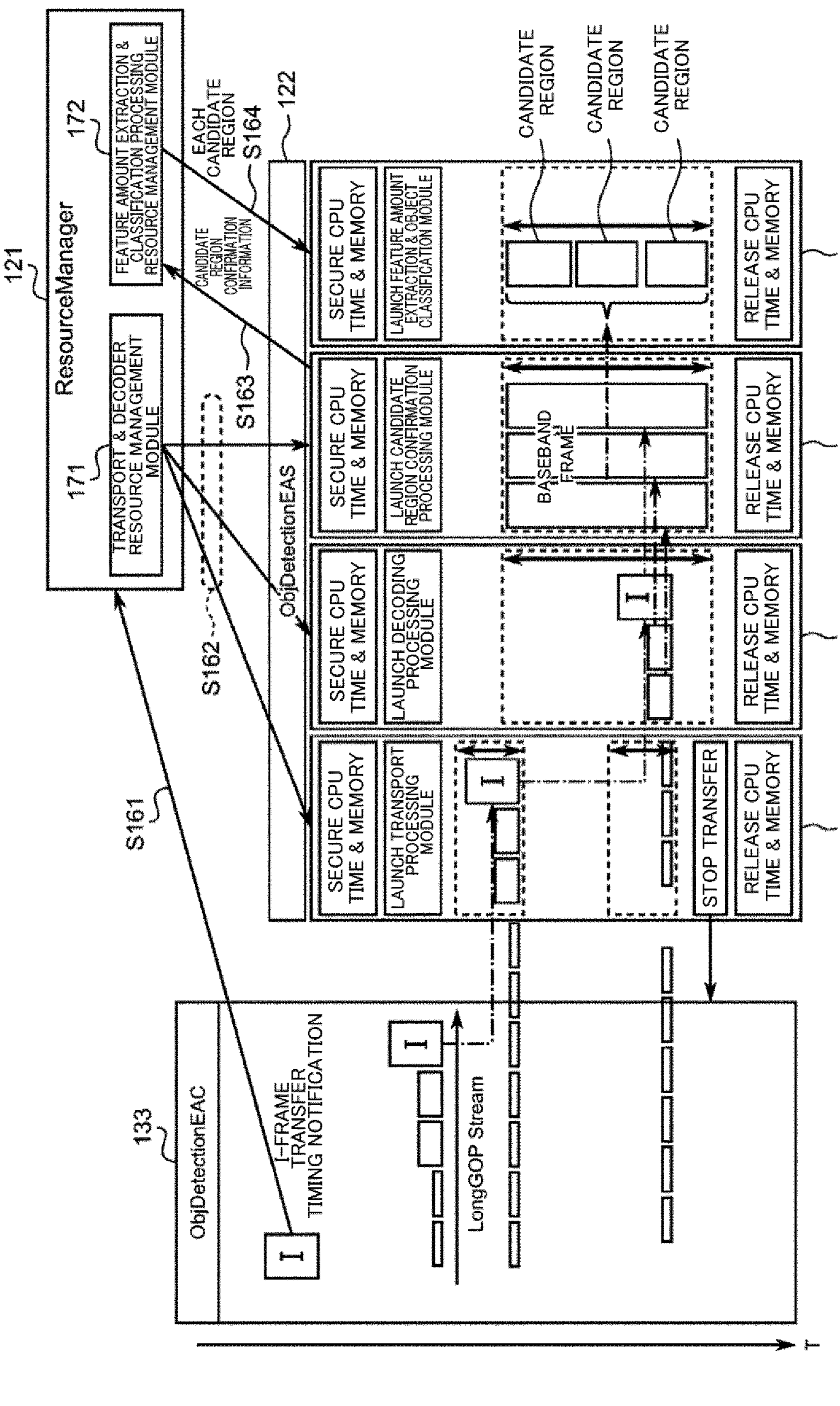
121
ResourceManager
171
TRANSPORT & DECODER RESOURCE MANAGEMENT MODULE
172
FEATURE AMOUNT EXTRACTION & CLASSIFICATION PROCESSING RESOURCE MANAGEMENT MODULE
EACH CANDIDATE REGION
S164
CANDIDATE REGION CONFIRMATION INFORMATION
S163
S162
S161
122
ObjDetectionEAS
SECURE CPU TIME & MEMORY
LAUNCH TRANSPORT PROCESSING MODULE
STOP TRANSFER
RELEASE CPU TIME & MEMORY
191A
LAUNCH DECODING PROCESSING MODULE
191B
LAUNCH CANDIDATE REGION CONFIRMATION PROCESSING MODULE
BASEBAND FRAME
192
LAUNCH FEATURE AMOUNT EXTRACTION & OBJECT CLASSIFICATION MODULE
CANDIDATE REGION
CANDIDATE REGION
CANDIDATE REGION
193
133
ObjDetectionEAC
I-FRAME TRANSFER TIMING NOTIFICATION
I
LongGOP Stream
T

Fig. 16

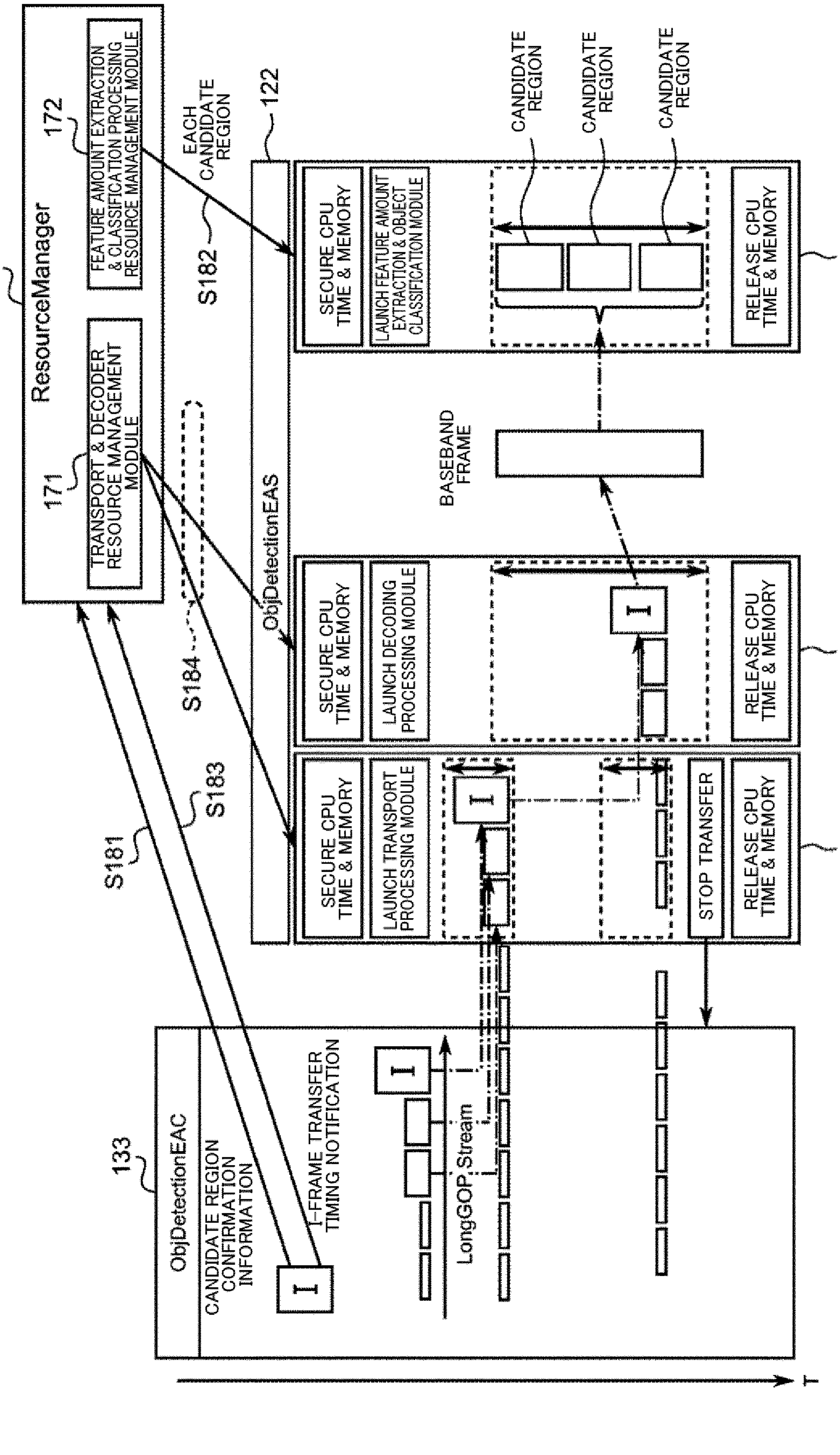
121
ResourceManager
171
TRANSPORT & DECODER RESOURCE MANAGEMENT MODULE
172
FEATURE AMOUNT EXTRACTION & CLASSIFICATION PROCESSING RESOURCE MANAGEMENT MODULE
EACH CANDIDATE REGION
S182
122
ObjDetectionEAS
SECURE CPU TIME & MEMORY
LAUNCH FEATURE AMOUNT EXTRACTION & OBJECT CLASSIFICATION MODULE
CANDIDATE REGION
CANDIDATE REGION
CANDIDATE REGION
RELEASE CPU TIME & MEMORY
193
BASEBAND FRAME
SECURE CPU TIME & MEMORY
LAUNCH DECODING PROCESSING MODULE
RELEASE CPU TIME & MEMORY
191B
S184
S183
S181
SECURE CPU TIME & MEMORY
LAUNCH TRANSPORT PROCESSING MODULE
STOP TRANSFER
RELEASE CPU TIME & MEMORY
191A
133
ObjDetectionEAC
CANDIDATE REGION CONFIRMATION INFORMATION
I-FRAME TRANSFER TIMING NOTIFICATION
LongGOP Stream
T

Fig. 17

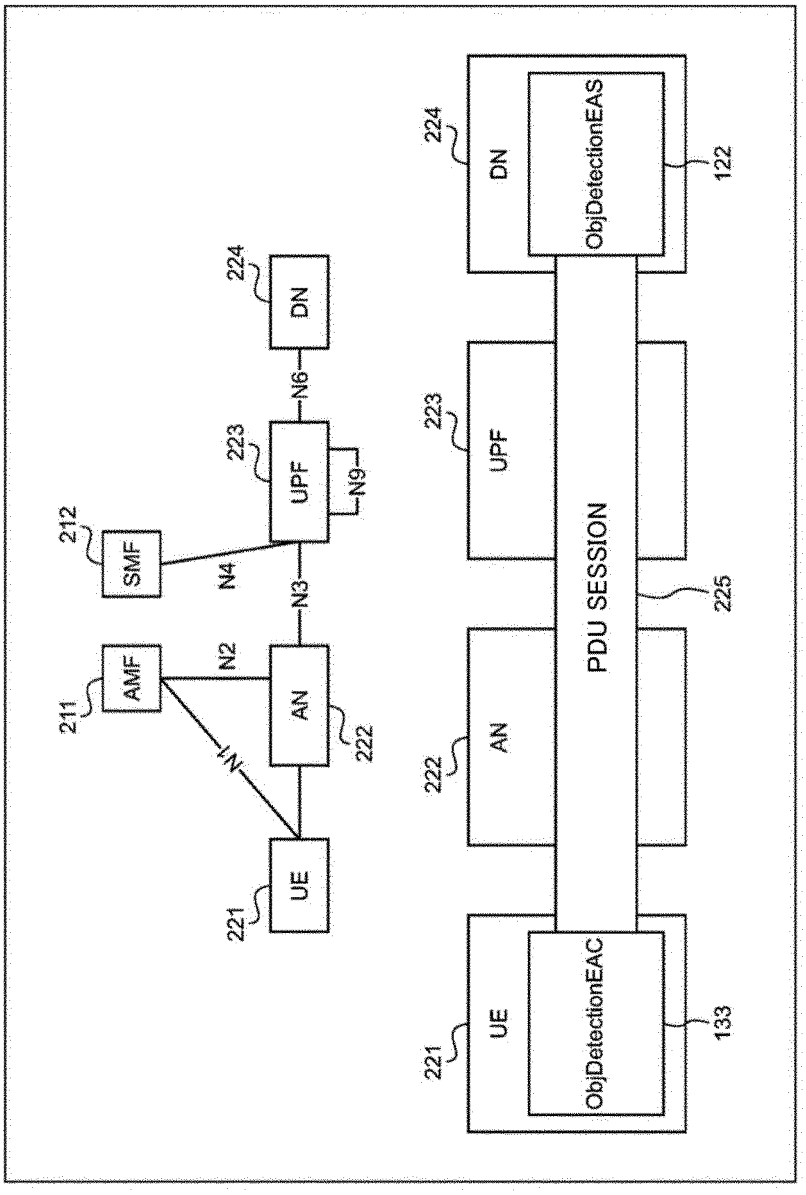

UE
AN
UPF
DN
AMF
SMF
N1
N2
N3
N4
N6
N9
221
222
223
224
211
212
ObjDetectionEAC
ObjDetectionEAS
PDU SESSION
225
133
122

Fig. 18

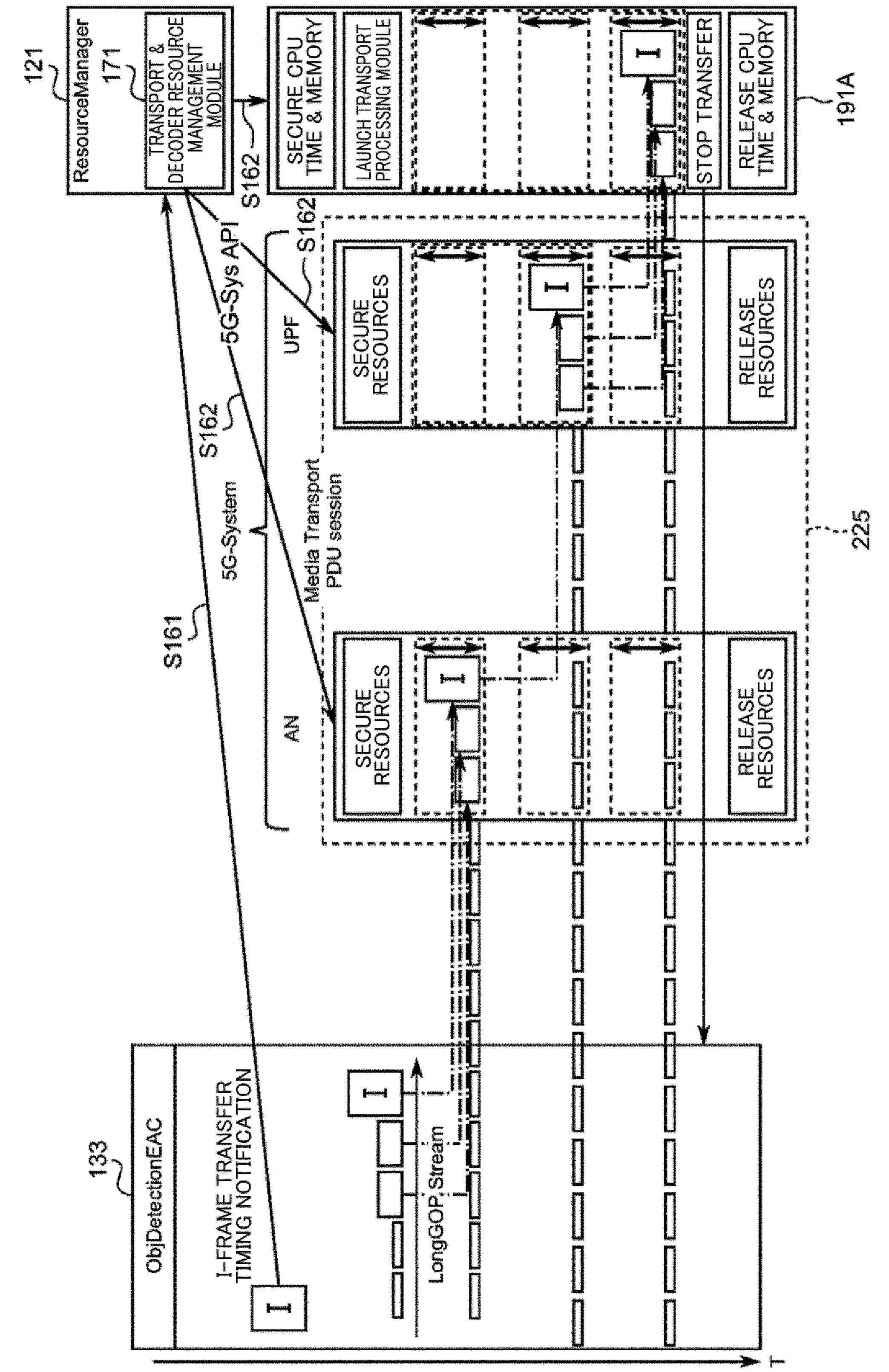
121
ResourceManager
171
TRANSPORT & DECODER RESOURCE MANAGEMENT MODULE
S162
SECURE CPU TIME & MEMORY
LAUNCH TRANSPORT PROCESSING MODULE
I
STOP TRANSFER
RELEASE CPU TIME & MEMORY
191A
S162
5G-Sys API
UPF
SECURE RESOURCES
I
RELEASE RESOURCES
S162
5G-System
Media Transport PDU session
225
S161
AN
SECURE RESOURCES
I
RELEASE RESOURCES
133
ObjDetectionEAC
I-FRAME TRANSFER TIMING NOTIFICATION
I
LongGOP Stream
I
T

Fig. 19

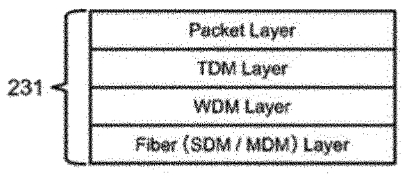

Fig. 20

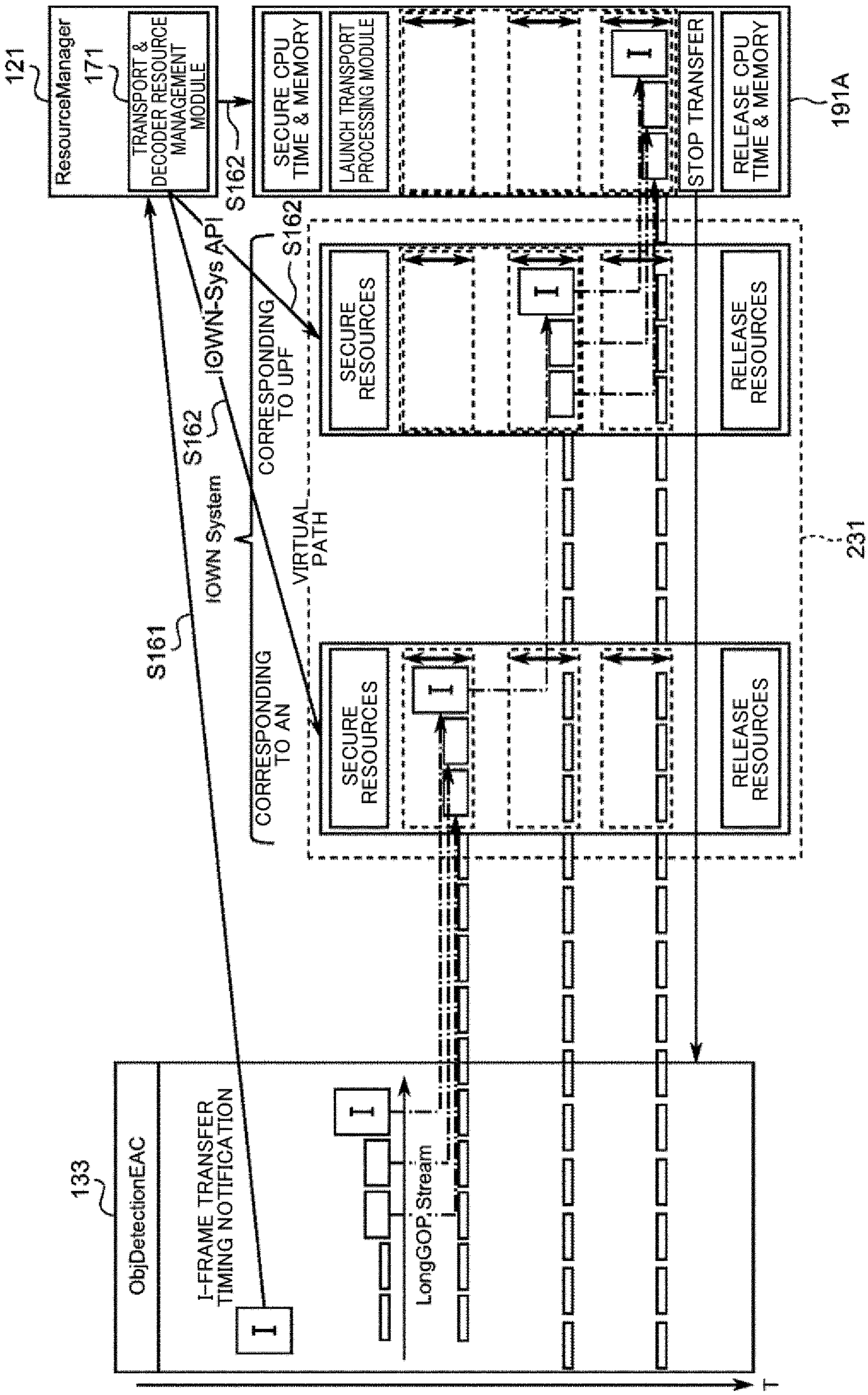
121
ResourceManager
171
TRANSPORT & DECODER RESOURCE MANAGEMENT MODULE
S162
SECURE CPU TIME & MEMORY
LAUNCH TRANSPORT PROCESSING MODULE
STOP TRANSFER
RELEASE CPU TIME & MEMORY
191A
S162
IOWN-Sys API
S162
CORRESPONDING TO UPF
SECURE RESOURCES
RELEASE RESOURCES
IOWN System
VIRTUAL PATH
231
S161
CORRESPONDING TO AN
SECURE RESOURCES
RELEASE RESOURCES
133
ObjDetectionEAC
I-FRAME TRANSFER TIMING NOTIFICATION
LongGOP Stream
I
T

Fig. 21

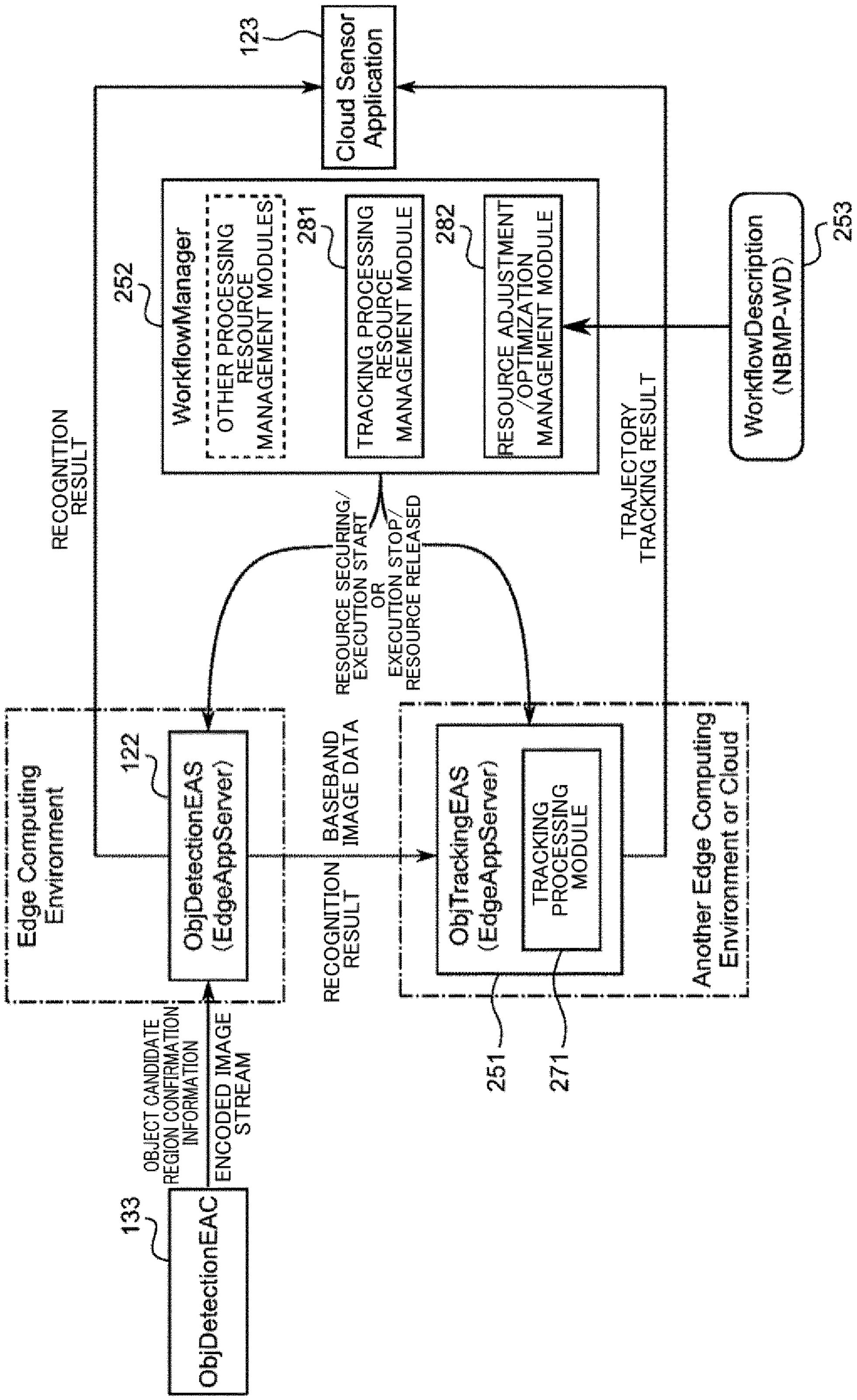

123
Cloud Sensor Application
252
WorkflowManager
OTHER PROCESSING RESOURCE MANAGEMENT MODULES
281
TRACKING PROCESSING RESOURCE MANAGEMENT MODULE
282
RESOURCE ADJUSTMENT /OPTIMIZATION MANAGEMENT MODULE
WorkflowDescription (NBMP-WD)
253
RECOGNITION RESULT
TRAJECTORY TRACKING RESULT
RESOURCE SECURING/ EXECUTION START OR EXECUTION STOP/ RESOURCE RELEASED
Edge Computing Environment
122
ObjDetectionEAS (EdgeAppServer)
BASEBAND IMAGE DATA
RECOGNITION RESULT
ObjTrackingEAS (EdgeAppServer)
TRACKING PROCESSING MODULE
Another Edge Computing Environment or Cloud
251
271
133
ObjDetectionEAC
OBJECT CANDIDATE REGION CONFIRMATION INFORMATION
ENCODED IMAGE STREAM

Fig. 22

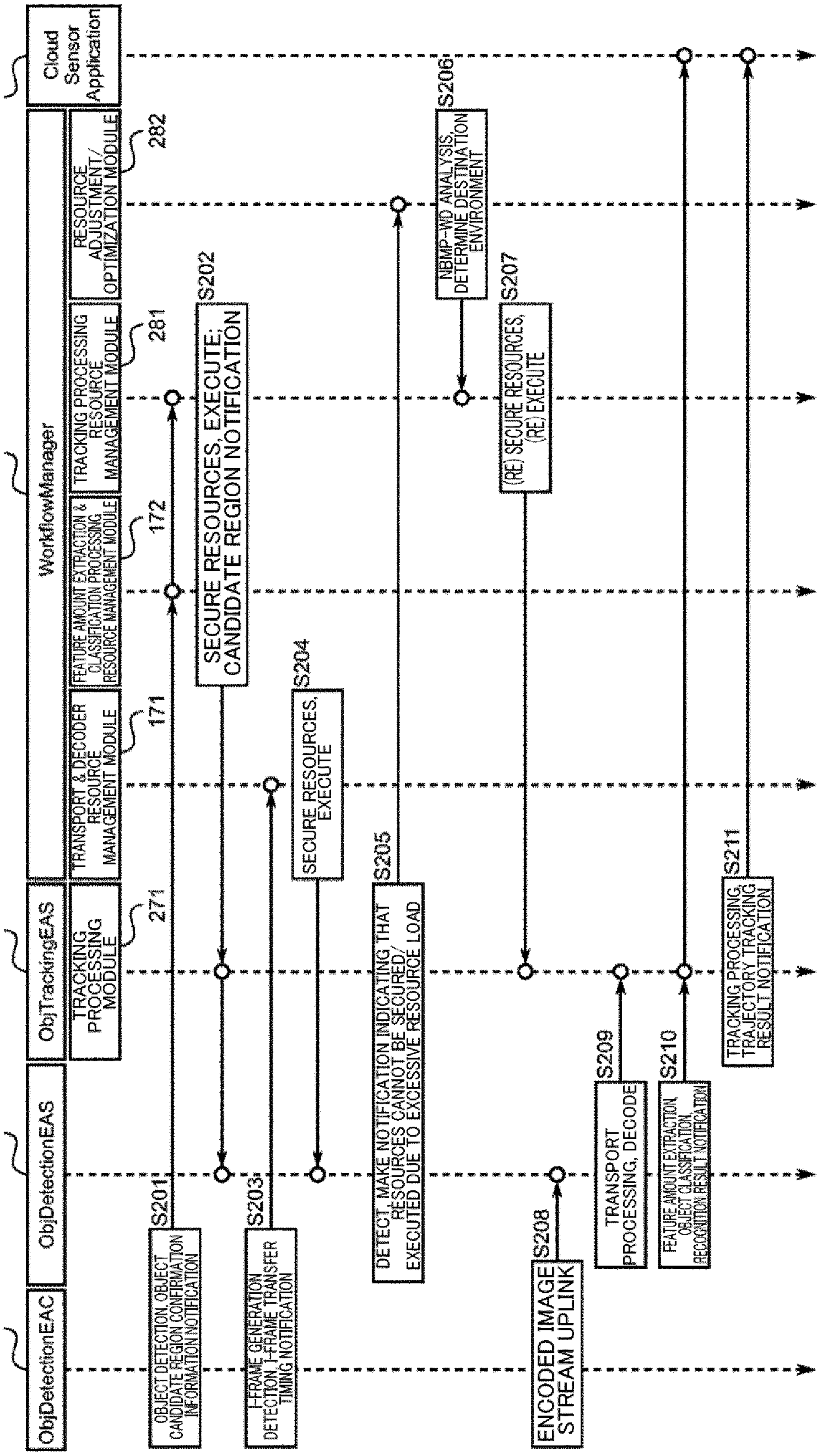
133
ObjDetectionEAC
122
ObjDetectionEAS
251
ObjTrackingEAS
TRACKING PROCESSING MODULE
271
252
WorkflowManager
TRANSPORT & DECODER RESOURCE MANAGEMENT MODULE
171
FEATURE AMOUNT EXTRACTION & CLASSIFICATION PROCESSING RESOURCE MANAGEMENT MODULE
172
TRACKING PROCESSING RESOURCE MANAGEMENT MODULE
281
RESOURCE ADJUSTMENT/ OPTIMIZATION MODULE
282
123
Cloud Sensor Application
S201
OBJECT DETECTION, OBJECT CANDIDATE REGION CONFIRMATION INFORMATION NOTIFICATION
S202
SECURE RESOURCES, EXECUTE; CANDIDATE REGION NOTIFICATION
S203
I-FRAME GENERATION DETECTION, I-FRAME TRANSFER TIMING NOTIFICATION
S204
SECURE RESOURCES, EXECUTE
S205
DETECT, MAKE NOTIFICATION INDICATING THAT RESOURCES CANNOT BE SECURED/ EXECUTED DUE TO EXCESSIVE RESOURCE LOAD
S206
NBMP-WD ANALYSIS, DETERMINE DESTINATION ENVIRONMENT
S207
(RE) SECURE RESOURCES, (RE) EXECUTE
S208
ENCODED IMAGE STREAM UPLINK
S209
TRANSPORT PROCESSING, DECODE
S210
FEATURE AMOUNT EXTRACTION, OBJECT CLASSIFICATION, RECOGNITION RESULT NOTIFICATION
S211
TRACKING PROCESSING, TRAJECTORY TRACKING RESULT NOTIFICATION

Fig. 23

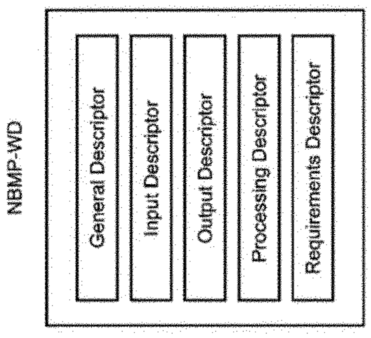


| Name | Type | Unit | Description |
| --- | --- | --- | --- |
| relativeProcessingDelayAcceptable | boolean | flag | Indicates if relative processing delay is acceptable before startup for the underlying resource. |

Fig. 24

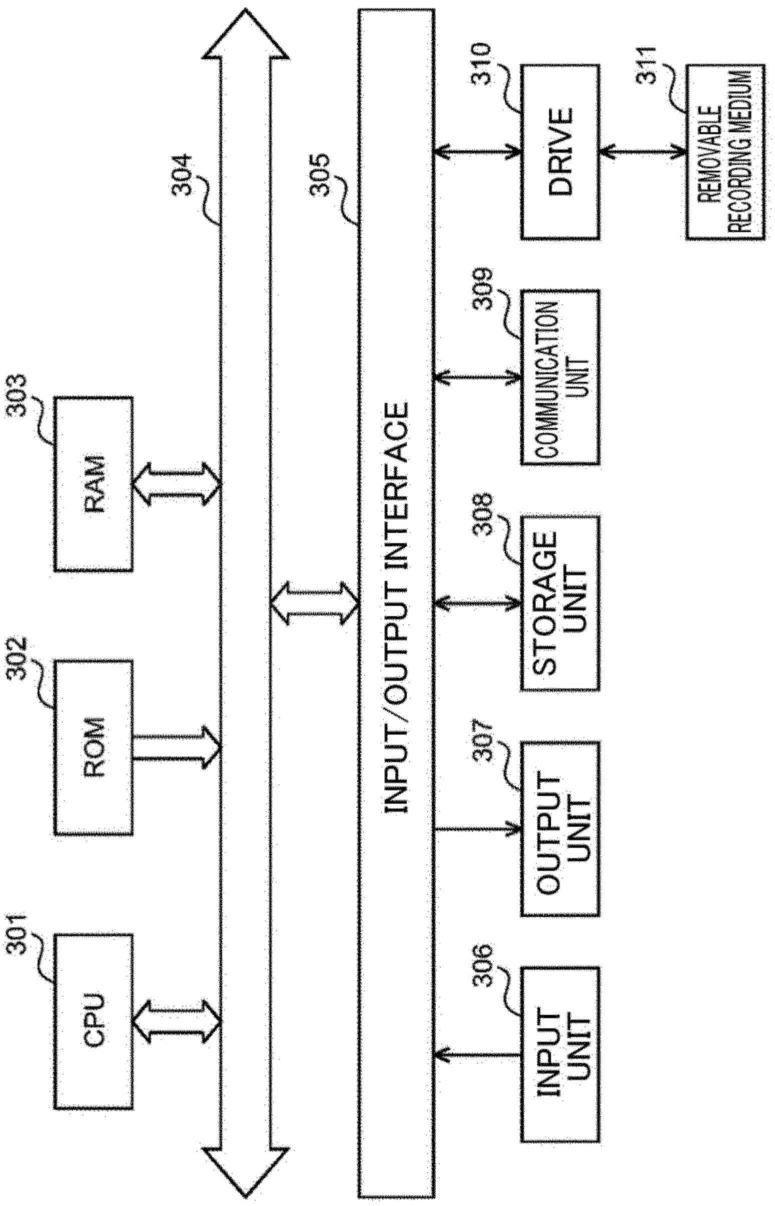
301
CPU
302
ROM
303
RAM
304
305
INPUT/OUTPUT INTERFACE
306
INPUT UNIT
307
OUTPUT UNIT
308
STORAGE UNIT
309
COMMUNICATION UNIT
310
DRIVE
311
REMOVABLE RECORDING MEDIUM

**INTERNATIONAL SEARCH REPORT**

International application No.
**PCT/JP2021/048505**

**A. CLASSIFICATION OF SUBJECT MATTER**

***H04N 7/18***(2006.01)i; ***H04L 47/76***(2022.01)i; ***H04N 5/225***(2006.01)i; ***H04N 5/232***(2006.01)i
FI: H04N7/18 K; H04L47/76; H04N5/225 300; H04N5/232 300

According to International Patent Classification (IPC) or to both national classification and IPC

**B. FIELDS SEARCHED**

Minimum documentation searched (classification system followed by classification symbols)

H04N7/18; H04L47/00; H04N5/225; H04N5/232; H04N19/00-19/98; H04N21/00-21/858

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-308067 A (TOSHIBA CORP) 02 November 2000 (2000-11-02)<br>abstract, paragraphs [0009]-[0010], fig. 2, 4 | 1-13 |
| A | JP 2013-78024 A (PANASONIC CORP) 25 April 2013 (2013-04-25)<br>paragraphs [0006], [0037], fig. 2 | 1-13 |
| E, A | WO 2021/260970 A1 (SONY GROUP CORP) 30 December 2021 (2021-12-30)<br>paragraphs [0002]-[0003], [0014]-[0383], fig. 1, 3-14, 16-47 | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2022** | **22 March 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/048505**

| Patent document cited in search report | | | Publication date (day/month/year) | Patent family member(s) | Publication date (day/month/year) |
|---|---|---|---|---|---|
| JP | 2000-308067 | A | 02 November 2000 | (Family: none) | |
| JP | 2013-78024 | A | 25 April 2013 | (Family: none) | |
| WO | 2021/260970 | A1 | 30 December 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020195769 A